(19) Europäisches Patentamt
European Patent Office
Office européen des brevets

(11) EP 3 753 974 A1

(12) # EUROPEAN PATENT APPLICATION
published in accordance with Art. 153(4) EPC

(43) Date of publication:
**23.12.2020 Bulletin 2020/52**

(21) Application number: **19754433.1**

(22) Date of filing: **12.02.2019**

(51) Int Cl.:
***C08J 7/04*** *(2020.01)* ***B32B 27/08*** *(2006.01)*
***B32B 27/20*** *(2006.01)*

(86) International application number:
**PCT/JP2019/004913**

(87) International publication number:
**WO 2019/159909 (22.08.2019 Gazette 2019/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2018 JP 2018023148**

(71) Applicant: **Teijin Limited**
**Osaka 530-0005 (JP)**

(72) Inventor: **EKINAKA, Tatsuya**
**Osaka-shi, Osaka 530-0005 (JP)**

(74) Representative: **Beckmann, Claus**
**Kraus & Weisert**
**Patentanwälte PartGmbB**
**Thomas-Wimmer-Ring 15**
**80539 München (DE)**

(54) **METHOD FOR PRODUCING SUBSTRATE HAVING HARD COAT LAYER CONTAINING FUNCTIONAL FINE PARTICLES**

(57) An object of the present invention is to provide a method for producing a substrate with a hard coat layer that can maintain the properties of the functional fine particles for a long period of time even under a severe use environment and has excellent wear resistance. A method for producing a substrate with a hard coat layer characterized by comprising (1) providing a semi-cured hard coat layer consisting mainly of a resin on the substrate, satisfying the following formula (a): $12 \leq X \leq 600$ (a), wherein X indicates time in second required for the ($\Delta$) haze of the glass with the semi-cured hard coat layer to exceed 5%, when the glass with the semi-cured hard coat layer is obtained by layering a 10 $\mu$m-thick, semi-cured hard coat layer on one side of 3 mm-thick float-processed soda glass; and then thus obtained glass with the semi-cured hard layer is immersed in an N-methylpyrrolidone solvent in an environment of 40°C, (2) applying a dispersion in which functional fine particles are dispersed in a dispersion solvent satisfying the following formula (b) on the semi-cured hard coat layer: $12 \leq X \times (A + 0.2)^2 \leq 90$ (b), wherein X denotes X described in the formula (a), A denotes the difference between the solubility parameter of the dispersion solvent in $MPa^{0.5}$ unit and the solubility parameter of *N*-methylpyrrolidone (22.3 $MPa^{0.5}$), and (3) curing the semi-cured hard coat layer completely.

EP 3 753 974 A1

## Description

FIELD

The present invention relates to a method for producing a substrate with a hard coat layer containing functional fine particles. In particular, the present invention relates to a method for producing a substrate with a hard coat layer that can maintain the properties of the functional fine particles for a long period of time even under a severe use environment and has excellent wear resistance.

BACKGROUND

Conventionally, since highly transparent plastic molding materials such as polycarbonate and acrylic resins are superior to inorganic glass in terms of light weight, impact resistance, workability, integral molding with surrounding parts, design, and the like, taking these advantages into account, the plastic molding materials have been widely used in place of inorganic glass in various applications.

However, since such resins are inferior to inorganic glass in terms of surface wear resistance or hardness, they are often used as a resin substrate with a hard coat layer for preventing scratching, in the form of a laminated hard coat layer. Many studies have been made to include functional fine particles in the hard coat layer in order to achieve properties in accordance with applications.

In PTL 1, an antistatic hard coat film having high conductivity to prevent electrification as well as sufficient hardness is provided by forming a specific hard coat layer containing inorganic electrically conductive particles on a substrate film. However, in order for functional fine particles to exhibit properties, a large amount of functional fine particles have to be included in the hard coat layer in many cases, leading to a decrease in wear resistance and transparency.

On the other hand, PTL 2 discloses a production method in which, in a first process, a semi-cured hard coat layer is formed by irradiation of ionizing radiation, and in a second process, an antistatic layer including antistatic particles is formed by curing the antistatic layer by irradiation of ionizing radiation, and the semi-cured hard coat layer is further cured. However, it was newly discovered by the inventors that when a test piece in which the functional fine particles described in the specification of PTL 2 were changed to hydrophobic silica was prepared and evaluated, as shown in Comparative Example 16 herein, curing had progressed too far at the semi-cured stage, and although the initial properties were favorable, favorable results were not obtained in a long-term environmental resistance test.

[CITATION LIST]

[PATENT LITERATURE]

[PTL1] Japanese Unexamined Patent Publication No. 2011-99056
[PTL2] Japanese Unexamined Patent Publication No. 2003-39607

SUMMARY

[TECHNICAL PROBLEM]

An object of the present invention is to provide a method for producing a substrate with a hard coat layer that can maintain the properties of the functional fine particles for a long period of time even under a severe use environment and has excellent wear resistance.

[SOLUTION TO PROBLEM]

After diligent efforts, the present inventors found that the aforementioned problem can be solved by a production method in which a semi-cured hard coat layer consisting mainly of a resin is provided on a substrate, and a dispersion in which functional fine particles are dispersed in a solvent satisfying a specific formula is applied to the semi-cured hard coat layer, and then the semi-cured hard coat layer is completely cured, thereby reaching the present invention.

In other words, regarding a solution to the above-described problem, the present invention is as follows:

<1> A method for producing a substrate with a hard coat layer characterized by comprising

(1) providing a semi-cured hard coat layer consisting mainly of a resin on the substrate, the semi-cured hard layer satisfying the following formula (a):

$$12 \leq X \leq 600 \quad (a)$$

wherein X indicates time in second required for the (Δ) haze of a glass with the semi-cured hard coat layer to exceed 5%, when the glass with the semi-cured hard coat layer is obtained by layering a 10 μm-thick, semi-cured hard coat layer on one side of 3 mm-thick float-processed soda glass; and then thus obtained glass with the semi-cured hard coat layer is immersed in an N-methylpyrrolidone solvent in an environment of 40°C,
(2) applying a dispersion in which functional fine particles are dispersed in a dispersion solvent satisfying the following formula (b) on the semi-cured hard coat layer:

$$12 \leq X \times (A + 0.2)^2 \leq 90 \; (b)$$

wherein X denotes X described in the formula (a), A denotes the difference between the solubility parameter of the dispersion solvent in $MPa^{0.5}$ unit and the solubility parameter of N-methylpyrrolidone (22.3 $MPa^{0.5}$), and
(3) curing the semi-cured hard coat layer completely.

<2> The method for producing a substrate with a hard coat layer according to <1>, wherein the thickness of the hard coat layer after complete curing is from 1 to 30 μm.
<3> The method for producing a substrate with a hard coat layer according to < 1> or <2>, wherein the average primary particle size of the functional fine particles is from 1 to 500 nm.
<4> The method for producing a substrate with a hard coat layer according to any one of <1> to <3>, wherein the solid content in the dispersion is from 0.1 to 5% by weight.
<5> The method for producing a substrate with a hard coat layer according to any one of <1> to <4>, wherein the dispersion consists of the functional fine particles and the solvent.
<6> The method for producing a substrate with a hard coat layer according to any one of <1> to <5>, wherein the hard coat layer comprises a hydrolysis condensate of an organosilicon compound as a main component.
<7> The method for producing a substrate with a hard coat layer according to any one of <1> to <6>, wherein an adhesive layer with a film thickness of from 0.1 to 20 μm mainly comprising an acrylic resin composition is sandwiched between the substrate and the hard coat layer.
<8> The method for producing a substrate with a hard coat layer according to any one of <1> to <7>, wherein the substrate is a light transmissive resin substrate having a thickness of from 1 to 25 mm.
<9> The method for producing a substrate with a hard coat layer according to any one of <1> to <8>, wherein the substrate is a substrate made of an amorphous thermoplastic resin.
<10> The method for producing a substrate with a hard coat layer according to any one of <1> to <9>, wherein the functional fine particles are present on the surface of the hard coat layer after complete curing with an exposure rate of from 5 to 50%.
<11> The method for producing a substrate with a hard coat layer according to any one of <1> to <10>, wherein the functional fine particles are dispersed in a greater number on the surface layer than in a deeper layer of the hard coat layer after complete curing.
<12> A substrate with a hard coat layer comprising: a substrate; and a hard coat layer containing functional fine particles, wherein the volume ratio (A) of the functional fine particles within 0.1 μm from the surface of the hard coat layer is from 1.0 to 35%, and the volume ratio (B) of the functional fine particles within 0.1 μm from an interface on the opposite side of the surface of the hard coat layer is from 0.01% to 5.0%, and (B)/(A) is 0.25 or less.
<13> The substrate with a hard coat layer according to < 12>, obtained by the production method according to any one of <1> to <11>.

[ADVANTAGEOUS EFFECTS OF INVENTION]

According to the present invention, not only the initial properties, but also properties and wear resistance of functional fine particles were sufficiently maintained and the adhesion between layers was favorable, even when environmental resistance tests were conducted assuming long-term outdoor exposure such as direct contact with moisture, including in rainy weather, high humidity/dry environment, high/low temperature changes, and exposure to strong ultraviolet light.

BRIEF DESCRIPTION OF DRAWINGS

FIG. 1 illustrates an example of a sectional schematic diagram of a substrate with a hard coat layer obtained using the production method of the present invention.
FIG. 2 illustrates an example of a sectional schematic diagram of a substrate with a hard coat layer obtained using the production method of the present invention.
FIG. 3 illustrates an example of a sectional schematic diagram of a substrate with a hard coat layer obtained using a conventional production method.
FIG. 4 illustrates an example of a sectional schematic diagram of a substrate with a hard coat layer obtained using a conventional production method.
FIG. 5 illustrates an area P satisfying formulas (a) and (b) specified in CLAIMS.

DESCRIPTION OF EMBODIMENTS

<<Method for Producing Substrate with Hard Coat Layer>>

The method for producing a substrate with a hard coat layer according to the present invention is characterized by comprising

(1) providing a semi-cured hard coat layer consisting mainly of a resin on the substrate, the semi-cured hard coat layer satisfying the following formula (a):

$$12 \leq X \leq 600 \quad (a)$$

wherein X indicates time in second required for the (Δ) haze of a glass with the semi-cured hard coat layer to exceed 5%, when the semi-cured glass with the hard coat layer is obtained by layering a 10 μm-thick, semi-cured hard coat layer on one side of 3 mm-thick float-processed soda glass; and then thus obtained glass with the semi-cured hard coat layer is immersed in an *N*-methylpyrrolidone solvent in an environment of 40°C,
(2) applying a dispersion in which functional fine particles are dispersed in a dispersion solvent satisfying the following formula (b) on the semi-cured hard coat layer:

$$12 \leq X \times (A + 0.2)^2 \leq 90 \text{ (b)}$$

wherein X denotes X described in the formula (a), A denotes the difference between the solubility parameter of the dispersion solvent in $MPa^{0.5}$ unit and the solubility parameter of *N*-methylpyrrolidone (22.3 $MPa^{0.5}$), and
(3) curing the semi-cured hard coat layer completely.

The present inventors have found that functional fine particles can be concentratedly arranged on the surface of a hard coat layer by curing a semi-cured hard coat layer and then applying a dispersion of functional fine particles containing a solvent on the semi-cured hard coat layer, wherein the solvent is capable of slightly dissolving and swelling the semi-cured hard coat layer, and then allowing the semi-cured hard coat layer to be completely cured. In this case, the present inventors found that when the semi-cured hard coat layer satisfies the above-described formula (a) and the solvent satisfies the above-described formula (b), the functional fine particles are fixed firmly on the hard coat layer and the properties of the functional fine particles can be maintained for a long period of time even under a severe use environment, and a substrate with a hard coat layer that has excellent wear resistance can be provided.
The method for producing a substrate with a hard coat layer according to the present invention has as an essential requirement that the hard coat layer containing functional fine particles is layered on the substrate, and another layer can also be layered if necessary.
In the present invention, it is an essential requirement that a hard coat layer containing functional fine particles is layered on at least one side of a substrate, but it is not necessarily essential that a layer is layered on the other side, and a preferred configuration is selected depending on the application and necessity. For example, a configuration such as formation of a hard coat layer that does not include functional fine particles on the other one side can also be selected.
Hereinafter, each of the components constituting the substrate with a hard coat layer according to the present

invention and its adjustment method will be successively described in detail.

(1) Process of Providing Semi-Cured Hard Coat Layer Consisting Mainly of Resin on Substrate (Substrate)

The substrate is not particularly limited as long as a hard coat layer can be formed. Examples of the substrate can include a light transmissive substrate such as a glass substrate or a light transmissive resin substrate. As the light transmissive substrate, an amorphous thermoplastic resin is preferable, and specific examples thereof include a polycarbonate resin, an acrylic resin such as a polymethyl methacrylate, a polyethylene terephthalate resin, a polyethylene naphthalate resin, a cyclic polyolefin resin, a polyphenylene ether resin, a polysulfone resin, a polyethersulfone resin, a polystyrene resin, and a polypropylene resin. Among these, a polycarbonate resin with excellent transparency, heat resistance, impact resistance, and the like is particularly preferable when considering utilization thereof in applications for automobile windows, construction materials, camera lenses, and solar cell surface protection panels.

Regarding the heat resistance of the resin, the heat distortion temperature (HDT) is preferably 100°C or more, and more preferably 120°C or more, and still more preferably 130°C or more.

For example, a polycarbonate resin is obtained by reacting a divalent phenol with a carbonate precursor by an interfacial polycondensation reaction, a melting method, or the like. Typical examples of the dihydric phenol include 2,2-bis(4-hydroxyphenyl)propane (commonly known as bisphenol A), 2,2-bis(3-methyl-4-hydroxyphenyl)propane, 2,2-bis(3,5-dimethyl-4-hydroxyphenyl)propane, 1,1-bis(4-hydroxyphenyl)ethane, 1,1-bis(4-hydroxyphenyl)cyclohexane, 2,2-bis(4-hydroxyphenyl)butane, 2,2-bis(4-hydroxyphenyl)-3-methylbutane, 9,9-bis{(4-hydroxy-3-methyl)phenyl}fluorene, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, α,α'-bis(4-hydroxyphenyl)-*m*-diisopropylbenzene, bis(4-hydroxyphenyl)sulfide, and bis(4-hydroxyphenyl)sulfone, and among them, bisphenol A is preferable. These divalent phenols can be used singly or in combination of two or more kinds thereof.

For the carbonyl halide precursor, a carbonyl halide, a carbonate ester, a haloformate, or the like is used, and specific examples thereof include phosgene, diphenyl carbonate, and a dihaloformate of a divalent phenol.

Upon reaction of a divalent phenol and a carbonate precursor by an interfacial polycondensation reaction or a melting method to produce a polycarbonate resin, a catalyst, a terminal stopper, an antioxidant of the divalent phenol, or the like may be used if necessary. The polycarbonate resin may be a branched polycarbonate resin copolymerized with a polyfunctional aromatic compound having three or more functionalities, a polyester carbonate resin copolymerized with an aromatic or aliphatic bifunctional carboxylic acid, or a mixture of two or more of the resulting polycarbonate resins.

The molecular weight of the polycarbonate resin in terms of viscosity average molecular weight (M) is preferably from 10,000 to 50,000, and more preferably from 15,000 to 35,000. A polycarbonate resin having such a viscosity average molecular weight has sufficient strength and has favorable melt flowability during molding, which is preferable.

The viscosity average molecular weight herein is obtained by substituting the specific viscosity ($\eta sp$) determined from a solution obtained by dissolving 0.7 g of a polycarbonate resin in 100 ml of methylene chloride at 20°C in the following formula:

$$\eta_{sp}/c=[\eta]+0.45\times[\eta]^2 c$$

(where [η] is the ultimate viscosity)

$$[\eta]=1.23\times10^{-4}M^{0.83}$$

c = 0.7

Other preferable examples of polycarbonate resins include various copolymerized polycarbonate resins such as a polycarbonate resin by copolymerization of isosorbide and an aliphatic diol, or a polycarbonate-polyorganosiloxane copolymer.

Polycarbonate resins, acrylic resins such as polymethyl methacrylate, cyclic polyolefin resins, polyphenylene ether resins, and the like, which are preferably used as a light transmissive substrate, can be used singly or in combination of two or more kinds thereof. A resin other than a resin as a main component can be blended to the extent that the properties of the present invention are not impaired.

In addition, a known additive (such as an infrared shielding material, an infrared absorber, an ultraviolet absorber, a dye pigment, a compound having a heat absorption capacity, various stabilizers, an antioxidant, a mold release agent, a bluing agent, a hydrolysis modifier, a flame retardant, an anti-drop agent, an antistatic agent, etc.), various fillers, or the like may be blended in if necessary.

The thickness of the substrate is not particularly limited, and is, for example, from 1 to 25 mm or from 1 to 20 mm, and more preferably from 2 to 10 mm, and still more preferably from 3 to 7 mm. When the thickness is the lower limit or more, the mechanical strength is favorable, which is preferable. On the other hand, when the thickness is the upper limit or less, a substrate having favorable surface smoothness and less optical distortion (such as perspective distortion) can be obtained, which is preferable.

(Hard Coat Layer)

A hard coat layer may be formed directly on the surface of the substrate, or may be formed via an adhesive layer. Examples of the hard coat layer include a light-curable hard coat layer and a heat-curable hard coat layer. Although depending on the type of substrate to be used, when a hard coat layer is formed directly on the surface of a substrate without an adhesive layer, a light-curable hard coat layer can preferably be used; and when a hard coat layer is formed on a substrate using an adhesive layer, a heat-curable hard coat layer can preferably be used.

(Light-curable Hard Coat Layer)

The light-curable hard coat layer preferably contains a hydrolysis condensate of an organosilicon compound, and is preferably a layer obtained by curing a (meth)acrylic resin composition containing from 10 to 90 parts by weight of a multifunctional (meth)acrylate, and from 90 to 10 parts by weight of inorganic oxide fine particles and/or a silicon compound hydrolysis condensate by ionizing radiation, ultraviolet light, or the like.

(Light-curable Hard Coat Layer --- Polyfunctional (Meth)acrylate)

The term "(meth)acrylate" as used herein refers to an acrylate and/or a methacrylate, and the term "(meth)acryloyl group" refers to an acryloyl group and/or a methacryloyl group.

Examples of such polyfunctional (meth)acrylates include trimethylolpropane di(meth)acrylate, ethylene oxide modified trimethylolpropane di(meth)acrylate, propylene oxide-modified trimethylolpropane di(meth)acrylate, glycerin di(meth)acrylate, bis(2-(meth)acryloyloxyethyl)hydroxyethyl isocyanurate, pentaerythritol tri(meth)acrylate, ditrimethylolpropane tri(meth)acrylate, and dipentaerythritol penta(meth)acrylate.

These ((meth)acrylates can be used singly, but two or more thereof are preferably used together in combination to achieve a balance between hardness and flexibility. Among these (meth)acrylates, a certain amount of pentaerythritol tri(meth)acrylate or pentaerythritol tetra(meth)acrylate is preferably blended in for improved scratch resistance.

(Light-curable Hard Coat Layer --- Inorganic Oxide Fine Particles)

Examples of inorganic fine particles include titanium oxide, zinc oxide, cerium oxide, and silicon oxide (in particular, colloidal silica).

(Light-curable Hard Coat Layer- Silicon Compound Hydrolysis Condensate)

Examples of the silicon compound hydrolysis condensate include a hydrolysis condensate of an alkoxysilane compound, specifically an alkyltriaxysilane such as methylmethoxysilane, methyltriethoxysilane, ethyltrimethoxysilane, or ethyltriethoxysilane; an 3-(meth)acryloyloxypropyltriaxysilane such as 3-(meth)acryloyloxypropyltrimethoxysilane, or 3-(meth)acryloyloxypropyltriethoxysilane; a vinyltrialkoxysilane such as vinyltrimethoxysilane or vinyltriethoxysilane; or the like, aminomethyltrimethoxysilane, aminomethyltriethoxysilane, 2-aminoethyltrimethoxysilane, 2-aminoethyltriethoxysilane, 3-aminopropyltrimethoxysilane, 3-aminopropyltriethoxysilane, or the like.

In a hydrolysis condensation reaction, a condensation reaction proceeds together with hydrolysis, and a large portion, preferably 100% by mole, of hydrolyzable groups of a hydrolyzable silane is hydrolyzed to hydroxyl groups (OH groups), and a large portion, preferably from 70 to 90% by mole, more preferably from 75 to 87% mole, and particularly preferably from 80 to 85% by mole, of those OH groups is condensed, which is preferable from the viewpoint of wear resistance and heat resistance of a coat layer, and the storage stability of a coating agent.

Such a hydrolysis reaction may be performed using only alkoxysilane, or, for improving the dispersibility of inorganic oxide particles, may be preferably performed in the presence of inorganic oxide particles.

(Light-curable Hard Coat Layer --- Reaction Product of (Meth)acrylic Resin)

In order to improve the dispersibility of inorganic particles, it is also preferable to use a (meth)acrylic resin with an alkoxysilyl group on a side chain or a (meth) acrylic resin with a hydroxyl group, an amine group or a carboxyl group

on a side chain by reacting with a compound with inorganic oxide particles and/or a silicon compound hydrolysis condensate.

Examples of these (meth)acrylic resins having an alkoxysilyl group on a side chain include a copolymer of a (meth)acrylic monomer having an alkoxysilyl group represented by general formula (1):

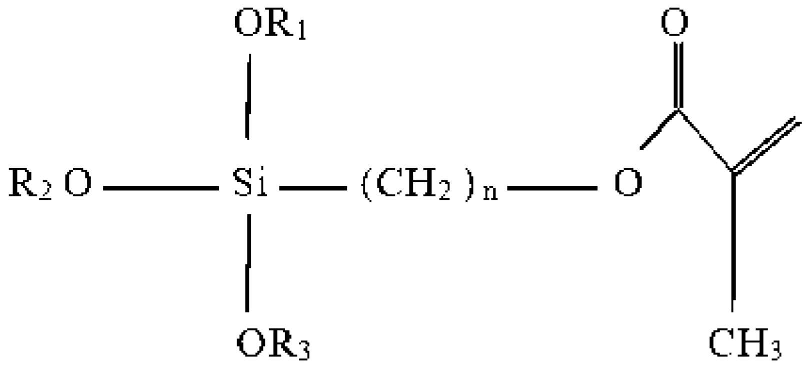

(1)

(in the formula, $R_1$, $R_2$, and $R_3$ are each independently an alkyl group having from 1 to 4 carbon atoms, and n is an integer from 1 to 6.) and another (meth)acrylic monomer.

Examples of other monomers here include those shown in (1) to (5) below.

(1) A (meth)acrylic acid ester with an alkyl group having from 1 to 22 carbon atoms such as methyl (meth)acrylate, ethyl (meth)acrylate, propyl (meth)acrylate, (meth)acrylic acid-n-butyl, (meth)acrylic acid-*t*-butyl, hexyl (meth)acrylate, hepsyl (meth)acrylate, octyl (meth)acrylate, nonyl (meth)acrylate, decyl (meth)acrylate, (meth)dodecyl acrylate, tetradecyl (meth)acrylate, hexadecyl (meth)acrylate, stearyl (meth)acrylate, octadecyl (meth)acrylate, or (meth)acrylic acid docosyl;

(2) A (meth)acrylic acid ester with an alicyclic alkyl group such as cyclohexyl (meth)acrylate, isobornyl (meth)acrylate, (meth)acrylic acid dicyclopentanyl, or dicyclopentenyloxyethyl (meth)acrylate;

(3) A (meth)acrylic acid ester with an aromatic ring such as benzoyloxyethyl (meth)acrylate, benzyl (meth)acrylate, phenylethyl (meth)acrylate, phenoxyethyl (meth)acrylate, phenoxydiethylene glycol (meth)acrylate, or 2-hydroxy-3-phenoxypropyl (meth)acrylate;

(4) An acrylate ester with a hydroxyalkyl group such as hydroxyethyl (meth)acrylate; hydroxypropyl (meth)acrylate, hydroxybutyl (meth)acrylate, hlycerol (meth)acrylate; lactone-modified hydroxyethyl (meth)acrylate, a (meth)acrylate ester with a polyalkylene glycol group such as polyethylene glycol (meth)acrylate, or polypropylene glycol (meth)acrylate;

(5) An unsaturated dicarboxylate such as dimethyl fumarate, diethyl fumarate, dibutyl fumarate, dimethyl itaconate, dibutyl itaconate, methyl ethyl fumarate, methyl butyl fumarate, and methyl ethyl itaconate.

Examples of (meth) acrylic resins with a hydroxyl group, an amine group, or a carboxyl group having a high polarity on a side chain include a polymer obtained by copolymerizing a polymerizable monomer having a (meth)acryloyl group and an epoxy group with another monomer, followed by a ring-opening reaction of the epoxy group to produce a polar group; and a copolymer of an acrylic monomer with a polar group such as hydroxyethyl (meth)acrylate, aminopropyl (meth)acrylate, or (meth)acrylic acid and another acrylic monomer.

Examples of the other monomers include the aforementioned (meth)acrylic esters. These (meth) acrylic resins desirably contain in the compounds from 0.1 to 5.0 mol/kg, for example, from 3.0 to 4.0 mol/kg of hydroxyl groups, amino groups, carboxylic groups, or alkoxysilyl groups, or a combination thereof. The content of the hydroxyl groups, amino groups, carboxyl groups, carboxyl groups, or alkoxysilyl groups, or a combination thereof, is defined as a quotient obtained by dividing the weight of each monomer used in polymerization of a (meth) acrylic resin by its molecular weight to calculate the equivalent amount of the substance blended, and summing the products of those values and the number of the hydroxyl groups, amino groups, carboxyl groups, or alkoxysilyl groups in each monomer molecule used, and dividing the sum by the total weight of the monomers used.

By reacting these acrylic resins with colloidal silica and/or a silicon compound hydrolysis condensate, an organic component such as an acrylic resin and an inorganic component such as colloidal silica are homogeneously dispersed in the reactants, and since these reaction products can disperse well with both organic and inorganic components, the organic and inorganic components are easily compatible with each other, resulting in increased homogeneity of organic and inorganic components in a coating layer.

When the amount of hydroxyl groups, amino groups, carboxyl groups, carboxyl groups, or alkoxysilyl groups,

or a combination thereof, in the (meth) acrylic resin compound is the lower limit or higher, the compatibility ability with inorganic components is sufficient, which is preferable, and when the amount is the upper limit or lower, the water resistance of a hard coat layer does not deteriorate and the coat layer is difficult to peel or crack in a boiling water test, which is preferable.

(Light-curable Hard Coat Layer --- Photopolymerization Initiator)

Preferably, a photopolymerization initiator is added to a resin composition for forming a hard coat layer, and the hard coat layer is cured by irradiation with ultraviolet light.

Examples of these photopolymerization initiators include those listed in (a) to (d) below, which may be used singly or in combination of two or more kinds thereof.

(a) Various benzophenones such as benzophenone, 3,3'-dimethyl-4-methoxybenzophenone, 4,4'-bis-dimethylaminobenzophenone, 4,4'-bis-diethylaminobenzophenone, 4,4'-dichlorobenzophenone, Michler's ketone, or 3,3' ,4,4' -tetra(t-butylperoxycarbonyl)benzophenone;
(b) Xanthones or thioxanthones such as xanthones, thioxanthones, 2-methylthioxanthones, 2-chlorothioxanthones, or 2,4-diethylthioxanthones; or various acyloin ethers such as benzoins, benzoin methyl ethers, benzoin ethyl ethers, or benzoin isopropyl ethers;
(c) $\alpha$-diketones such as benzyl and diacetyl; sulfides such as tetramethylthiuram disulfide and p-tolyl disulfide; various benzoic acids such as 4-dimethylaminobenzoic acid and ethyl 4-dimethylaminobenzoic acid; and
(d) 3,3'-carbonyl-bis(7-diethylamino)coumarin, 1-hydroxycyclohexylphenyl ketone, 2,2'-dimethoxy-1,2-diphenylethane-1-one, 2-methyl-1-[4-(methylthio)phenyl]-2-morpholinopropane-1-one, 2-benzyl-2-dimethylamino-1-(4-morpholinophenyl)-butan-1-one, 2-hydroxy-2-methyl-1-phenylpropan-1-one, 2,4,6-trimethylbenzoyl diphenylphosphine oxide, bis(2,4,6-trimethylbenzoyl)phenylphosphine oxide, 1-[4-(2-hydroxyethoxy)phenyl]-2-hydroxy-2-methyl-1-propan-1 -one, 1-(4-isopropylphenyl)-2-hydroxy-2-methylpropane-1-one, 1-(4-dodecylphenyl)-2-hydroxy-2-methylpropane-1-one, 4-benzoyl-4'-methyl dimethyl sulfide, 2,2'-diethoxyacetophenone, benzyl dimethyl ketal, benzyl-$\beta$-methoxyethyl acetal, methyl o-benzoyl benzoate, bis(4-dimethylaminophenyl)ketone, *p*-dimethylaminoacetophenone, $\alpha,\alpha$-dichloro-4-phenoxyacetophenone, pentyl-4-dimethylaminobenzoate, 2-(o-chlorophenyl)-4,5-diphenylimidazolyl dimer, 2,4-bis-trichloromethyl-6-[di-(ethoxycarbonylmethyl)amino]phenyl-*S*-triazine, 2,4-bis-trichloromethyl-6-(4-ethoxy)phenyl-*S*-triazine, 2,4-bis-trichloromethyl-6-(3-bromo-4-ethoxy)phenyl-*S*-triazine anthraquinone, 2-*t*-butyl anthraquinone, 2-amyl anthraquinone, and $\beta$-chloroanthraquinone.

Among the above-described photopolymerization initiators, use of one or a mixture of two or more selected from the group consisting of 1-hydroxycyclohexylphenyl ketone, 2-hydroxy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylethane-1-one, 2,4,6-trimethylbenzoyl diphenylphosphine oxide, bis(2,4,6-trimethylbenzoyl)phenylphosphine oxide, 2-methyl-1-[4-(methylthio)phenyl]-2-morpholino-1-propanone, and 2-benzyl-2-dimethylamino-1-(4-morpholinophenyl)-butan-1-one provides a coating that shows activity over a wider range of wavelengths of light and is highly curable, which is preferable.

The photopolymerization initiator is preferably used in an amount within a range such that the function thereof can be sufficiently exhibited, and there is no precipitation of crystals or deterioration of physical properties of the coating film, and specifically, the amount of the photopolymerization initiator used with respect to 100 parts by mass of a resin composition is preferably from 0.05 to 20 parts by mass, and particularly preferably from 0.1 to 10 parts by mass.

(Light-curable Hard Coat Layer --- Others)

In addition to the above-described photopolymerization initiators, various photosensitizers may be used in a resin composition constituting a hard coat layer. Examples of photosensitizers include amines, ureas, sulfur-containing compounds, phosphorus-containing compounds, chlorine-containing compounds or nitriles or other nitrogen-containing compounds.

To a resin composition constituting a hard coat layer, an ultraviolet absorber, solvent or the like is further added if necessary. Both organic and inorganic ultraviolet absorbers can be used, and examples of organic ultraviolet absorbers include a triazine derivative such as 2-[4-{(2-hydroxy-3-dodecyloxypropyl)oxy}-2-hydroxyphenyl]-4,6-bis(2,4-dimethylphenyl)-1,3, 5-triazine or 2-[4-{(2-hydroxy-3-tridecyloxypropyl)oxy}-2-hydroxyphenyl]-4,6-bis(2,4-dimethylphenyl)-1,3, 5-triazine, 2-(2'-xanthene carboxy-5'-methylphenyl)benzotriazole, 2-(2'-*o*-nitrobenzyloxy-5'-methylphenyl)benzotriazole, 2-xanthene carboxy-4-dodecyloxibenzophenone, and 2-*o*-nitrobenzyloxy-4-dodecyloxybenzophenone. Examples of inorganic ultraviolet absorbers include fine particles of metal oxides such as titanium oxide, zinc oxide, or cerium oxide. Among these ultraviolet absorbers, a triazine ultraviolet absorber is particularly preferably used in terms of intensity

and wavelength of ultraviolet absorption, resistance to decomposition, and resistance to elution.

(Light-curable Hard Coat Layer --- Solvent)

Solvents to be used are not particularly restricted, and when a (meth) acrylic resin and inorganic particles are included in a coating agent, solvents below that have an affinity for both are preferable.
A ketone solvent such as acetone, methyl ethyl ketone, methyl-n-propyl ketone, methyl isopropyl ketone, methyl-n-butyl ketone, methyl isobutyl ketone, methyl-n-amyl ketone, methyl-n-hexyl ketone, diethyl ketone, ethyl-n-butyl ketone, di-n-propyl ketone, diisobutyl ketone, cyclohexanone, or isophorone.
An ether-based solvent such as ethyl ether, isopropyl ether, n-butyl ether, diiso-amyl ether, ethylene glycol dimethyl ether, ethylene glycol diethyl ether, diethylene glycol dimethyl ether, diethylene glycol, dioxane, or tetrahydrofuran.
An ester-based solvent such as ethyl formate, propyl formate, formic acid-n-butyl, ethyl acetate, acetate-n-propyl, isopropyl acetate, acetate-n-butyl acetate, acetate-n-amyl, ethylene glycol monomethyl ether acetate, ethylene glycol monoethyl ether acetate, diethylene glycol monomethyl ether acetate, diethylene glycol monoethyl ether acetate, propylene glycol monomethyl ether acetate, or ethyl-3-ethoxypropionate.
An alcohol-based solvent such as methanol, ethanol, isopropyl alcohol, n-butyl alcohol, isobutyl alcohol, diacetone alcohol, 1-methoxy-2-propanol, 3-methoxy-1-propanol, 3-methoxy-1-butanol, or 3-methyl-3-methoxybutanol;
A hydrocarbon solvent such as toluene, xylene, SOLVESSO 100, SOLVESSO 150, SWAZOL 1800, SWAZOL 310, ISOPER E, ISOPER G, EXXON NAPHTHA 5, or EXXON NAPHTHA 6.
These solvents may be used singly or in combination of two or more kinds thereof.
Among them, acetone, methyl ethyl ketone, methyl isobutyl ketone, ethyl ether, dioxane, tetrahydrofuran, ethyl acetate, 1-methoxy-2-propanol, or toluene is preferably used.
Although single use is not preferable, when a (meth)acrylic resin and inorganic particles are contained in a coating agent, methanol, ethanol, isopropyl alcohol, n-butyl alcohol, or isobutyl alcohol is preferably used as a mixing solvent from the viewpoint of balancing affinity for both and aggression against a substrate.

(Heat-curable Hard Coat Layer --- Hydrolysis Condensate of Organosilicon Compound)

A heat-curable hard coat layer is preferably a layer containing a hydrolysis condensate of an organosilicon compound as a main component, which is cured by heating a siloxane resin composition.
The siloxane resin composition contains silica fine particles as inorganic oxide fine particles with a primary particle size from 1 to 200 nm other than the hydrolysis condensate of an organosilicon compound, and also contains metal oxide fine particles and another component if necessary.
The hydrolysis condensate of an organosilicon compound which is a main component of a hard coat layer is preferably obtained by hydrolysis condensation of some or all of an organosilicon compound represented by the following formula (2) by a sol-gel reaction or the like with a moderate range of reaction progression rates.

$$R^1{}_mR^2{}_nSi(OR^3)_{4-m-n} \qquad (2)$$

In the formula, $R^1$ and $R^2$ are each independently an alkyl group having from 1 to 4 carbon atoms, a vinyl group, or an alkyl group having from 1 to 3 carbon atoms substituted with one or more groups selected from a methacryloxy group, an amino group, a glycidoxy group, and a 3,4-epoxy cyclohexyl group. $R^1$ and $R^2$ are preferably each independently an alkyl group having from 1 to 4 carbon atoms, and particularly preferably a methyl group.
$R^3$ is an alkyl group having from 1 to 4 carbon atoms or a vinyl group. $R^3$ is preferably an alkyl group having from 1 to 3 carbon atoms, and particularly preferably a methyl group or an ethyl group. m and n are each independently an integer of 0, 1, or 2, and m + n is an integer of 0, 1, or 2. m and n are each preferably 0 or 1. m + n is preferably 1.
Examples of organosilicon compounds include an alkoxysilane such as tetramethoxysilane, tetraethoxysilane, tetra-n-propoxysilane, tetraisopropoxysilane, tetra-n-butoxysilane, tetraisobutoxysilane, methyl trimethoxysilane, methyl triethoxysilane, ethyl trimethoxysilane, isobutyl trimethoxysilane, vinyl trimethoxysilane, vinyl triethoxysilane, γ-methacryloxypropyl trimethoxysilane, β-(3,4-epoxycyclohexyl)ethyl trimethoxysilane, γ-glycidoxypropyl trimethoxysilane, γ-aminopropyl trimethoxysilane, γ-aminopropyl triethoxysilane, *N*-β(aminoethyl)-γ-aminopropyl trimethoxysilane, *N*-β(aminoethyl)-gamma-aminopropyl triethoxysilane, dimethyl dimethoxysilane, dimethyl diethoxysilane, vinyl methyl dimethoxysilane, 3-methacryloxy propylmethyl dimethoxysilane, 3-glycidoxy propylmethyl dimethoxysilane, or 3-amino propylmethyl diethoxysilane. Among them, alkyl trialkoxysilane is preferable from the viewpoint of reaction control.
In addition, an organosilicon compound in which an alkoxy group of the above-described alkoxysilanes is substituted with a chloro group, a Br group, a fluorine group, or the like can also be utilized if necessary.
Although these organosilicon compounds can be used singly or in a mixture depending on the purpose of the

application, it is preferred that from 50 to 90% by weight of the organosilicon compounds are methyl trialkoxysilane and/or methyl triethoxysilane in the organosilicon compounds in order to form a hard coat layer having excellent mechanical strength and coating appearance. A mixture of a bifunctional alkoxysilane such as dimethyl dimethoxysilane is also used if necessary in order to impart flexibility to a cured film, depending on the application.

Hydrolysis condensation of an organosilicon compound needs coexistence of water, and usually, from 1 to 10 equivalents, preferably from 1.5 to 7 equivalents of water is added to 1 equivalent of the organosilicon compound. When a water-dispersion type colloidal silica dispersion is used as silica particles as described below, water is supplied from this dispersion, and water is further added if necessary.

Hydrolysis condensation reaction needs to be carried out under acidic conditions, and it is preferable to control an appropriate range using the pH value as an indicator. The pH of a resin composition that forms a hard coat layer is desirably adjusted to preferably from 3.0 to 6.5, and more preferably from 4.5 to 6.0. By adjusting the pH to this range, the progression of gelation of a resin composition at room temperature can be inhibited and storage stability can be increased.

Control of the pH (acidic conditions) is carried out by adding acid and adjusting the content of the curing catalyst, as described below.

An acid added in advance to the colloidal silica dispersion of silica particles as described below can also be utilized. From the viewpoint of reaction control of hydrolysis condensation, it is also preferable to add an acid in a time-splitting manner as a reaction progresses.

Examples of these acids include an inorganic acid such as hydrochloric acid, sulfuric acid, nitric acid, phosphoric acid, nitrite, perchloric acid, or sulfaminic acid; and an organic acid such as formic acid, acetic acid, propionic acid, butyric acid, oxalic acid, succinic acid, maleic acid, malonic acid, lactic acid, or para-toluenesulfonic acid, and, from the viewpoint of ease of pH control, an organic carboxylic acid such as formic acid, acetic acid, propionic acid, butyric acid, oxalic acid, succinic acid, malonic acid, or maleic acid is preferable.

Here, when an inorganic acid is used, it is preferable to dissolve the inorganic acid in water preferably at an equivalent concentration of from 0.0001 to 2, and more preferably at an equivalent concentration of from 0.001 to 0.1. The amount of water mixed with the inorganic acid is in accordance with the suitable range described above.

When an organic acid is used, preferably, based on 100 parts by weight of an organosilicon compound, from 0.1 to 50 parts by weight of the organic acid is used, and more preferably, based on 100 parts by weight of the organosilicon compound, from 1 to 30 parts by weight of the organic acid is preferably used.

The conditions for hydrolysis condensation reaction vary depending on the type of organosilicon compound to be used, the type and amount of colloidal silica of the F component described below that coexists in the system, other additive components, and the like, and it is difficult to generalize the conditions, but usually the temperature of the system is from 20 to 70°C and the reaction time is from 1 hour to several days. According to these methods, no precipitation is generated, and a hard coat layer having excellent mechanical strength and coating appearance can be obtained.

(Heat-curable Hard Coat Layer --- Inorganic Oxide Fine Particles)

Silica fine particles are preferably mixed as a major component of inorganic oxide fine particles having a primary particle size of from 1 to 200 nm, and more preferably, fine particles having a primary particle size of about from 5 to 40 nm and composed of silicon oxide or silicon oxide having some organic groups or Si-OH groups. In general, silica particles are classified into precipitated silica, gelled silica, dried silica, colloidal silica, and the like according to manufacturing methods, and those classified as colloidal silica (hereinafter referred to as colloidal silica) are preferably used in the present invention.

Colloidal silica is produced by a method using water glass as a raw material, a method using metallic silicon powder as a raw material, a gas phase synthesis method, a sol-gel method (hydrolysis condensation of organosilicon compounds), or the like.

As colloidal silica, colloidal silica dispersed in water or organic solvent is preferably used, and more specific examples of colloidal silica include Snowtex O manufactured by Nissan Chemical Industries, Ltd., or Cataloid SN30 manufactured by Catalysts and Chemicals Industries Co., Ltd. as a product dispersed in an acidic aqueous solution, SNOWTEX 30 or SNOWTEX 40 manufactured by Nissan Chemical Industries, Ltd., CATALOID S30 or CATALOID S40 manufactured by Catalysts and Chemicals Industries Co., Ltd. as a product dispersed in a basic aqueous solution, and MA-ST, IPA-ST, NBA-ST, IBA-ST, EG-ST, XBA-ST, NPC-ST, or DMAC-ST manufactured by Nissan Chemical Industries, Ltd. as a product dispersed in an organic solvent.

Colloidal silica can be used in both water-dispersion type and organic solvent-dispersion type, but the water-dispersion type is preferably used. In the case of water-dispersion type colloidal silica, a large number of hydroxyl groups exist on the surface of silica particles, which are tightly bonded to a hydrolysis condensate of an organosilicon compound, resulting in a hard coat layer with high mechanical strength. Although for water-dispersion type colloidal silica, both acidic aqueous solution dispersion type colloidal silica and basic aqueous solution dispersion type colloidal silica can

be used, acidic aqueous solution dispersion type colloidal silica is preferably used from the viewpoint of the diversity of selection of curing catalysts, appropriate hydrolysis of triquoxysilane, and realization of condensation state.

The mixing ratio of a hydrolysis condensate of an organosilicon compound and silica fine particles in a resin composition forming a hard coat layer preferably has a suitable range for the mechanical strength, the appearance of a coating film, the thermal expansion rate, and the shrinkage of the layer during crosslink curing, and the like of a hard coat layer to be obtained, and is generally preferably from 10 to 50% by weight of the silica fine particles to from 50 to 90% by weight of the hydrolysis condensate of the organosilicon compound in terms of $R^1{}_mR^2{}_nSiO_{(4-m-n)/2}$. The ratio is more preferably from 15 to 45% by weight of the silica fine particles to from 55 to 85% by weight of the hydrolysis condensate of the organosilicon compound in terms of $R^1{}_mR^2{}_nSiO_{(4-m-n)/2}$, and most preferably from 20 to 40% by weight of the silica fine particles to from 60 to 80% by weight of the hydrolysis condensate of the organosilicon compound in terms of $R^1{}_mR^2{}_nSiO_{(4-m-n)/2}$

The resin composition forming a hard coat layer preferably contains, as a secondary component of inorganic oxide particles having a primary particle size of from 1 to 200 nm, metal oxide particles if necessary. The metal oxide particles preferably have ultraviolet absorption properties, which can further enhance the resistance of a substrate with a hard coat layer to ultraviolet rays such as sunlight or the like incident from the outside.

Specific examples of the metal oxide fine particles include titanium oxide, zinc oxide, cerium oxide, cerium oxide, tin oxide, tungsten oxide, and zirconium oxide, and one or more of these metal oxide fine particles are preferably used. Metal oxide fine particles with a primary particle diameter of about from 1 nm to 200 nm, more preferably about from 3 to 50 nm, are preferably used, and fine particles to which a surface coating has been applied in advance for the purpose of enhancing dispersibility in the system and/or inhibiting photocatalytic activity are also preferably used. Regarding the particle size distribution of metal oxide fine particles, when the cumulative 50% particle size and the cumulative 90% particle size of the metal oxide fine particles in laser diffraction particle size distribution measurement are D50 and D90, respectively, it is preferable that D90 is 100 nm or less and D90/D50 is 20 or less.

The content of metal oxide fine particles is preferably from 0.1 to 15 parts by weight, and more preferably from 0.5 to 5.0 parts by weight based on the total of 100 weight parts of a hydrolysis condensate of an organosilicon compound and silica particles.

(Heat-curable Hard Coat Layer --- Curing Catalyst)

The resin composition that forms the hard coat layer preferably further contains a curing catalyst. Examples of such curing catalysts include: a lithium salt of an aliphatic carboxylic acid such as formic acid, acetic acid, propionic acid, butyric acid, lactic acid, tartaric acid, or succinic acid; an alkali metal salt such as a sodium salt or a potassium salt; a quaternary ammonium salt such as a benzyltrimethylammonium salt, a choline salt, a tetramethylammonium salt, or a tetraethylammonium salt; and a metal acetyl acetonate such as aluminum acetyl acetonate, titanyl acetyl acetonate, nickel acetyl acetonate, or cobalt acetyl acetonate. Specifically, sodium acetate, potassium acetate, choline acetate, or benzyltrimethylammonium acetate is preferably used. The content of the curing catalyst (I) based on the total 100 parts by weight of a hydrolysis condensate of an organosilicon compound and silica particles is preferably from 0.01 to 10 parts by weight, and more preferably from 0.1 to 5 parts by weight.

(Heat-curable Hard Coat Layer --- Solvent)

Since a resin composition forming a hard coat layer is mainly formed by wet coating, it is also preferable to contain a solvent in order to improve paintability. However, since such a resin composition already contains: water in water-dispersion type colloidal silica that does not participate in a hydrolysis reaction; a lower alcohol generated as a result of hydrolysis of an organosilicon compound; an organic solvent for a dispersion medium when organic solvent-dispersion type colloidal silica is used; an acid added for pH adjustment in relation to controlling progression of a hydrolysis condensation reaction an organosilicon compound; and the like, the solvent composition, the mixing amount, and the like of the entire resin composition need to be determined by balancing them.

The solvent preferably stably dissolves a hydrolysis condensate of an organosilicon compound, silica particles, and the solid content of other resin compositions forming a hard coat layer, and it is preferable that at least 20% or more, preferably 50% or more by weight of the total solvent is an alcohol-based solvent.

Specific examples of such an alcohol-based solvent include methanol, ethanol, 1-propanol, 2-propanol, 1-butanol, 2-butanol, 2-methyl-1-propanol, 2-ethoxyethanol, 1-methoxy-2-propanol, 4-methyl-2-pentanol, and 2-butoxyethanol. Among these, a low boiling point alkol having from 1 to 3 carbon atoms is preferable, and from the viewpoint of solubility, stability and coatability, methanol, ethanol, and 2-propanol are particularly preferred.

Other solvents that can be used need to be miscible with water/alcohols, and examples of such solvents include a ketone such as acetone, methyl ethyl ketone, or methyl isobutyl ketone; an ether such as tetrahydrofuran, 1,4-dioxane, or 1,2-dimethoxyethane; and an ester such as ethyl acetate, n-butyl acetate, isobutyl acetate, or ethoxyethyl acetate.

The content of such a solvent is preferably from 50 to 2,000 parts by weight, more preferably from 150 to 1,400 parts by weight, for the total 100 parts by weight of a hydrolysis condensate of an organosilicon compound and silica particles. The concentration of the solid content is preferably from 5 to 70% by weight, and more preferably from 7 to 40% by weight.

(Heat-curable Hard Coat Layer --- Others)

A known leveling agent can be added to a resin composition forming a hard coat layer for the purpose of improving the coatability and smoothness of a layer to be obtained.

Examples of such leveling agents include: silicone compounds SH200-100cs, SH28PA, SH29PA, SH30PA, ST83PA, ST80PA, ST97PA, ST86PA, and SH21PA manufactured by Dow Corning Toray Silicone Co., Ltd.; silicone compounds KP321, KP322, KP323, KP324, KP326, KP340, and KP341 manufactured by Shin-Etsu Chemical Co., Ltd.; and fluoro-surfactants F-179, F-812A, and F-815 manufactured by DIC Corporation. These leveling agents may be used alone or in combination with two or more kinds thereof, and preferably from 0.0001 to 2.0 parts by weight, and more preferably from 0.0005 to 1.0 part by weight of the leveling agent is used for 100 parts by weight of the total solid content of a resin composition forming a hard coat layer.

An infrared shielding agent may be added to a resin composition forming a hard coat layer, if necessary. Examples of such infrared shielding agents include a cyanine-based compound, a squallium-based compound, a thiol-nickel-complex salt-based compound, a phthalocyanine-based compound, a triallylmethane-based compound, a naphthoquinone-based compound, an anthraquinone-based compound, carbon black, antimony oxide, tin oxide doped-indium oxide, and lanthanum boroide.

As a coating method of a resin composition forming a hard coat layer, a bar-coating method, a dip-coating method, a flow-coating method, a spray-coating method, a spin-coating method, a roller-coating method, or the like can be selected as appropriate depending on the shape of a substrate to be coated.

(Adhesive Layer)

An adhesive layer may optionally be present between a substrate and a hard coat layer. Those skilled in the art may choose whether to use an adhesive layer or not, depending on the compositions of the substrate and the hard coat layer to be used, and when an adhesive layer is used, the composition of the adhesive layer may be selected. For example, various types of resins or resin compositions can be used for the adhesive layer, and it is particularly desirable that the layer contains an acrylic resin composition as a main component. The acrylic resin composition can be either thermoplastic or heat-curable in which a cross-linking reaction can be carried out during heat treatment, and a heat-curable composition is preferably used from the viewpoint of heat resistance and durability in a high temperature and high humidity environment. For example, the adhesive layer described in paragraphs 0043 to 0121 of pamphlet WO2015/147295 can be preferably used.

(Adhesive Layer --- Ultraviolet Transmittance and Others)

When the substrate with a hard coat layer of the present invention is mainly used for outdoor applications, it is preferable that the ultraviolet transmittance of an adhesive layer in the entire ultraviolet wavelength range of from 300 to 360 nm of the adhesive layer is less than 1% from the viewpoint of ensuring the long-term durability of the substrate. The ultraviolet transmittance is more preferably less than 0.05%, and still more preferably less than 0.01%.

Here, for adjusting the ultraviolet transmittance, a product (% by volume · μm) obtained by multiplying the volume fraction (% by volume) of an ultraviolet absorber mixture in the adhesive layer by the thickness (μm) of the adhesive layer can be used as an index, and the suitable range of this value depends on an intended use, and is at least 20 (% by volume · μm) or more, more preferably 40 (% by volume · μm) or more, still more preferably 70 (% by volume · μm) or more, and most preferably 100 (% by volume · μm) or more.

When an adhesive layer is formed by wet coating, the film thickness of the adhesive layer is preferably in the range of from 1 to 20 μm, more preferably from 2 to 15 μm, and still more preferably from 3 to 12 μm. When the film thickness is less than 1 μm, an effect of enhancing adhesion with a hard coat layer may become unstable, which is not preferable. When the film thickness exceeds 20 μm, there are problems such as difficulty in obtaining a highly smooth coating appearance, which is not preferable in many cases. As described below, when an adhesive layer is formed by another method, a suitable range of the layer thickness is somewhat different in many cases.

For adjusting the ultraviolet absorption wavelength, it is preferable to use a combination of ultraviolet absorbers with different absorption bands, and it is preferable to adjust the amount of the mixture of a triazine-based ultraviolet absorber residue in unit (A-4), an ultraviolet absorber of (D) component, and another ultraviolet absorber (organic ultraviolet absorber, inorganic ultraviolet absorber) described in pamphlet WO2015/147295.

(Adhesive Layer --- Silane Coupling Agent)

As other components, an acrylic resin composition can further contain a silane coupling agent and/or a hydrolysis condensate of a silane coupling agent, if necessary. By containing such a silane coupling agent and/or hydrolysis condensate of a silane coupling agent, adhesion between a substrate and an adhesive layer and/or between an adhesive layer and a hard coat layer can be improved, and the adhesion can be maintained for a long period of time.

Examples of such silane coupling agents include 3-aminopropyltrimethoxysilane, 3-aminopropyltriethoxysilane, $\gamma$-(2-aminoethyl)aminopropyl trimethoxysilane, $\gamma$-(2-aminoethyl)aminopropyl triethoxysilane, $\gamma$-(2-aminoethyl)aminopropyl methyl dimethoxysilane, $\gamma$-(2-aminoethyl)aminopropylmethyl diethoxysilane, $\gamma$-methacryloxypropyltrimethoxysilane, $\gamma$-methacryloxypropyltriethoxysilane, *n*-$\beta$-(*n*-vinylbenzylaminoethyl)-$\gamma$-aminopropyltrimethoxysilane hydrochloride, *n*-$\beta$-(*n*-vinylbenzylaminoethyl)-$\gamma$-aminopropyltriethoxysilane hydrochloride, $\gamma$-glycidoxypropyltrimethoxysilane, $\gamma$-glycidoxypropyltriethoxysilane, $\gamma$-mercapto-propyltrimethoxysilane, $\gamma$-mercapto-propyltriethoxysilane, vinyl triaxethoxysilane, $\gamma$-anilinopropyltrimethoxysilane, $\gamma$-anilinopropyltriethoxysilane, vinyl trimethoxysilane, vinyl triethoxysilane, octadecyldimethyl[3 -(trimethoxysilyl)propyl] ammonium chloride, octadecyldimethyl[3 -(triethoxysilyl)propyl] ammonium chloride, $\gamma$-urcidopropyltrimethoxysilane, $\gamma$-ureidopropyltriethoxysilane, 3-isocyanatopropyltrimethoxysilane, and 3-isocyanatopropyltriethoxysilane. Silane coupling agents and/or hydrolysis condensates of silane coupling agents may be used singly or in combination of two or more kinds thereof.

The content is preferably from 0.1 to 10 parts by weight, and more preferably from 0.2 to 8 parts by weight for 100 parts by weight of the total of (A) and (B) components described in pamphlet WO2015/147295.

(Adhesive Layer --- Others)

As another component, a light stabilizer (such as HALS, graphene, graphene oxide, or single-wall carbon nanotubes), inorganic particles (such as silicon oxide, aluminum oxide, talc, or calcium carbonate), and the like may be mixed in appropriate amounts in an acrylic resin composition if necessary.

A known leveling agent can be blended for the purpose of improving the coatability and smoothness of a layer to be obtained, and examples of such leveling agents include: silicone compounds SH200-100cs, SH28PA, SH29PA, SH30PA, ST83PA, ST80PA, ST97PA, ST86PA, and SH21PA manufactured by Dow Corning Toray Silicone Co., Ltd.; silicone compounds KP321, KP322, KP323, KP324, KP326, KP340, and KP341 manufactured by Shin-Etsu Chemical Co., Ltd.; and fluoro-surfactants F-179, F-812A, and F-815 manufactured by DIC Corporation. Such leveling agents may be used singly or in combination of two or more kinds thereof, and the leveling agent is preferably used in an amount of from 0.0001 to 2.0 parts by weight, more preferably from 0.0005 to 1.0 part by weight, for 100 parts by weight of the total solid content.

(Adhesive Layer --- Solvent)

In forming an adhesive layer by wet coating, it is preferable for an acrylic resin composition to contain a solvent other than (A) to (D) and other components described in pamphlet WO2015/147295.

Examples of solvents include: ketones such as acetone, methyl ethyl ketone, methyl isobutyl ketone, and cyclohexanone; ethers such as tetrahydrofuran, 1,4-dioxane, and 1,2-dimethoxyethane; esters such as ethyl acetate and ethoxyethyl acetate; alcohols such as methanol, ethanol, 1-propanol, 2-propanol, 1-butanol, 2-butanol, 2-methyl-1-propanol, 2-methyl-2-propanol, 2-ethoxyethanol, 1-methoxy-2-propanol, and 2-butoxyethanol; hydrocarbons such as n-hexane, n-heptane, isooctane, benzene, toluene, xylene, gasoline, light oil, and kerosene; acetonitrile; nitromethane; and water, and these may be used singly or may be used in a mixture of two or more kinds thereof.

In order to improve the coatability, the concentration of solid content by solvent dilution is preferably adjusted to from 1 to 50% by weight, and more preferably from 3 to 30% by weight.

(Adhesive Layer --- Forming Method)

The method of applying coating to a substrate may be selected from a bar coating method, a dip coating method, a flow coating method, a spray coating method, a spin coating method, or a roller coating method as appropriate according to the shape of the substrate to be applied. For a substrate on which an acrylic resin composition, usually a solvent is dried and removed at a temperature from room temperature to less than the thermal deformation temperature of the substrate and then the substrate is thermally cured.

It is preferable that heat curing is carried out at a high temperature within a range in which the heat resistance of a substrate is not problematic since the curing can be completed more quickly. At room temperature, heat curing does not proceed completely, and a coat layer does not have a sufficient crosslink density required for an adhesive layer. In such a heat curing process, crosslinkable groups in a heat-curable acrylic resin composition react to increase the

crosslinking density of a coat layer, resulting in a coat layer with excellent adhesion, boiling water resistance, and durability in high-temperature environments.

The heat curing temperature is preferably from 80 to 160°C, more preferably from 100 to 140°C, and still more preferably from 110 to 130°C. The heat curing time is preferably from 10 minutes to 3 hours, and more preferably from 20 minutes to 2 hours. Cross-linkable groups are cross-linked by heating, and a layered body with an acrylic resin layer as adhesion is obtained. When the heat curing time is 10 minutes or less, a crosslinking reaction does not progress sufficiently, resulting in a first layer with poor durability and weather resistance in high temperature environments. For the performance of an acrylic resin composition, a heat curing time of three hours or less is sufficient.

By heat curing an acrylic resin composition to form an adhesive layer, favorable adhesion to a hard coat layer and/or a substrate can be obtained, and a layered body with excellent wear resistance and weather resistance can be obtained.

As described above, an adhesive layer is formed by wet coating, and an adhesive layer can also be formed by other methods such as lamination of an adhesive layer resin on a substrate, insert molding, dichromatic molding, melt lamination, or melt pressing. As a resin for an adhesive layer, acrylic resins with increased heat resistance by copolymerizing the above-described component A and various components other than the component A, and other resins can be widely used. When an adhesive layer is formed by these methods, the suitable thickness range of the adhesive layer differs somewhat from that of the above-described wet coating method, and is preferably adjusted in the range of about from 10 to 200 μm.

(Method of Forming Semi-cured Hard Coat Layer)

A "semi-cured hard coat layer" herein means a hard coat layer in a state in which, after the hard coat layer is coated, a curing reaction is partially progressed to reach dry-to-touch.

In a method of forming a semi-cured hard coat layer, when a hard coat layer is made of an ionizing-radiation-curable resin composition which is cured by ionizing radiation, a solvent is dried and a coating film is partially crosslinked by adjusting the irradiation conditions of ionizing radiation such as ultraviolet light or electron beam after drying the solvent.

When a hard coat layer is made of a heat-curable resin composition, the drying conditions are adjusted to form a partially crosslinked structure.

A semi-cured hard coat layer in the present invention satisfies the following formula (a).

$$12 \leq X \leq 600 \qquad (a)$$

wherein X is the time in second required for the (Δ) haze of a glass with the semi-cured hard coat layer to exceed 5%, when the glass with the semi-cured hard coat layer which is obtained by layering a 10 μm-thick semi-cured state hard coat layer on one side of 3 mm-thick float-processed soda glass is immersed in an *N*-methylpyrrolidone solvent in an environment of 40°C.

A hard coat layer applied to the substrate used in the present invention is selected from one that can be dissolved or swollen by an *N*-methylpyrrolidone solvent from the viewpoint of ensuring adhesion to the substrate. As a result, when a glass with a hard coat layer layered thereon is immersed in an *N*-methylpyrrolidone solvent, the haze increases as the hard coat layer is attacked by the solvent, causing crystallization and an increase in surface roughness.

The rise in haze is suppressed as a hard coat layer cures, since dissolution and swelling become slower. The closer the solubility parameter of a coat layer in a cured state as a solid to that of N-methylpyrrolidone, the more likely the coat layer is to dissolve and swell (crystallization and increase in surface roughness), the faster the rate of haze rise increases.

The value of the lower limit in the above-described formula (a) is more preferably 20, more preferably 25, and still more preferably 42. The value of the upper limit in the above-described formula (a) is more preferably 550, more preferably 300, and still more preferably 200. When the time is the lower limit or more, the initial properties can be maintained at a high level, which is preferable. When the time is the upper limit or less, a favorable durability is obtained, which is preferable.

(2) Process of Applying Dispersion in Which Functional Fine Particles are Dispersed in Solvent Satisfying Following Formula (b) on theSemi-cured Hard Coat

(Functional Fine Particles)

The functional fine particles used in the present invention are not particularly limited as long as the microparticles

are exposed on the surface of a hard coat layer at a specific ratio to impart functionality, and examples thereof include an antifouling material, a light modulation material, an antistatic material, a transparent conductive material, an anti-reflective material, a protective material, a ferroelectric material, an ultraviolet absorbing material, and a heat-ray shielding material.

As an antifouling material, water-repellent particles and inorganic particles having photocatalytic properties are preferable, and especially water-repellent particles are preferable, and as specific water-repellent particles, hydrophobic silica particles, nanodiamonds modified with silicon or fluorine, or the like are preferably used. Among them, hydrophobic silica is especially preferable because it is easy to balance hydrophobicity and dispersibility due to the high activity of a functional group on the surface and because it does not lose transparency when fine particles are added due to its low refractive index.

Hydrophobic silica preferably used in the present invention is a hydrophobic silica which is capped with a hydrophobic treatment agent to make a hydrophilic hydroxyl group on the surface of silica fine particles compatible with an organic solvent. Examples of hydrophobic treatment agents include an acid halide, an acid anhydride, and a halogenated hydrocarbon complex.

The average primary particle diameter of the functional fine particles used in the present invention is preferably from 1 to 500 nm, more preferably from 10 to 200 nm, and still more preferably from 15 to 50 nm. When the average primary particle diameter is the lower limit or higher, an appropriate unevenness for achieving water repellency can be formed, which is preferable, and when the average primary particle diameter is the upper limit or lower, an unevenness for ensuring the transparency of a coat layer can be formed, which is preferable.

(Functional Fine Particles Dispersion)

The functional fine particle dispersion used in the present invention differs depending on the above-described state of the semi-cured hard coat layer, and a dispersion in which functional fine particles are dispersed in a solvent satisfying the following formula (b) is used.

$$12 \leq X \times (A + 0.2)^2 \leq 90 \qquad \text{(b)}$$

wherein X denotes X as described in formula (a). A indicates the difference between the solubility parameter of the dispersion solvent in $MPa^{0.5}$unit and the solubility parameter of *N*-methylpyrrolidone (22.3 $MPa^{0.5}$).

The area satisfying the above-described formulas (a) and (b) is an area (P) shown in FIG. 3.

In the present invention, functional fine particles can be distributed in an appropriate concentration gradient distribution in the vicinity of the surface of a hard coat layer by applying a dispersion in which a fine particles are dispersed in a solvent system capable of swelling and partially dissolving the surface of the part of the semi-cured hard coat layer.

Substantially, the closer the solubility parameter of a solvent system in a dispersion is to the solubility parameter of a semi-cured hard coat layer resin, the greater the ability of the dispersion of functional fine particles to dissolve and swell the hard coat layer, and the more quickly the dispersion penetrates into the hard coat layer.

It was found that the difference between the solubility parameters of a dispersion solvent and the solubility parameters of *N*-methylpyrrolidone can be used to determine the ability to dissolve and penetrate a hard coat layer.

As a result of intensive study, it was found that satisfying the above-described formulas (a) and (b) is desirable to distribute functional fine particles appropriately on the surface.

The lower limit value in the above-described formula (b) is more preferably 15, and still more preferably 20. The upper limit value in the above-described formula (b) is more preferably 80, and still more preferably 70. When the value of the term is the lower limit or higher, a certain amount of functional fine particles are exposed on the surface of a hard coat layer to form an appropriate surface shape and to express a function of the functional fine particles, which is preferable. When the value of the term is the upper limit or less, the properties and wear resistance of the functional fine particles are sufficiently maintained not only in the initial properties but also when an environmental resistance test is conducted, which is preferable.

The solvent is not particularly restricted as long as the-above-described formula (b) is satisfied, and an aromatic hydrocarbon such as toluene or xylene, an alcohol such as methoxypropanol, isopropanol, or isobutanol, or a ketone such as methyl ethyl ketone or acetone is preferable, and these can be used not only singly but also in combination, and using a mixture is preferable.

The solid content in a dispersion is preferably from 0.1 to 5% by weight, and more preferably from 0.2 to 5% by weight, and still more preferably from 0.5 to 2% by weight. When the content of the amount is the lower limit or higher, a required amount of fine particles can be distributed on the surface of a coat layer, which is preferable, and when the amount is the upper limit or lower, the transparency of a coat layer is not compromised by the presence of more fine

particles than necessary in a coat layer, which is preferable.

A dispersion can contain other components such as a binder in addition to functional fine particles to the extent that an effect of the present invention is not impaired. When a binder is contained, the weight ratio of the binder to functional fine particles is preferably from 60 to 0: from 40 to 100, and more preferably from 40 to 0: from 60 to 100. When the weight ratio is in the above range, the amount of fine particles on the surface of a coat layer is easily controlled within an appropriate range, which is preferable. Use of a resin composition which is used for a semi-cured hard coat layer, as a binder, forms a crosslinked structure between the resin composition in the semi-cured hard coat layer and the binder, which is preferable. However, in the present invention, even when no binder is present in a dispersion, by forming a hard coat layer under conditions satisfying the above-described formula (b), the properties and wear resistance of the functional fine particles are sufficiently maintained not only in the initial properties but also when an environmental resistance test is conducted. When no binder is present, functions of functional fine particles can be better exhibited, which is preferable.

(3) Regarding Process of Completely Curing Semi-cured Hard Coat Layer

(Method for Completely Curing Hard Coat Layer)

When a hard coat layer is made of an ionizing-radiation-curable resin composition that is cured by ionizing radiation, the hard coat layer is completely cured by adjusting the irradiation conditions of ionizing radiation such as ultraviolet light or electron beam to progress the cross-linked structure.

When a curing process is performed with ultraviolet light, ultraviolet light emitted from an ultra-high pressure mercury lamp, a high pressure mercury lamp, a low pressure mercury lamp, a carbon arc, a xenon arc, a metal halide lamp, or the like is used. When a coating layer is completely cured, it is common to irradiate with ultraviolet light having an integrated exposure in an ultraviolet wavelength range of from 315 to 400 nm (A area) of, for example, from 0.5 $J/cm^2$ to 50 $J/cm^2$, depending on the source of radiation or the type and concentration of an initiator. When a curing process is performed with an electron beam, in general, an electron beam with a normal acceleration voltage of from 70 to 300 kV is usually irradiated at from 5 to 300 kGy (from 0.5 to 30 Mrad), and preferably at from 10 to 50 kGy (from 1 to 5 Mrad).

When a hard coat layer uses a heat-curable resin composition that cures by heat, curing can be completed more quickly when curing is performed at a higher temperature without causing a problem with the heat resistance of a resin substrate, and since curing reactions proceed simultaneously, the curing reaction proceeds in a state where a functional group can move sufficiently to cause an appropriate reaction, and a dense curing state can be achieved, which is preferable in many cases. The heat curing temperature depends on the heat resistance of a resin substrate, and preferably, the temperature is set to be 10°C or lower than the heat deformation temperature of the resin substrate. The heat curing time is preferably adjusted appropriately according to the heat curing temperature or chemical composition of a hard coat layer, or the like, and generally, is about from 30 minutes to 2 hours at 120°C or higher, and about from 1 hour to 4 hours at 110°C or lower.

The thickness of a hard coat layer after complete curing is preferably from 1 to 30 μm, more preferably from 1 to 25 μm, and still more preferably from 5 to 20 μm. By using such a range of thicknesses, adhesion with a substrate is excellent and appropriate wear resistance and weather resistance can be achieved, which is preferable.

(Distribution of Functional Fine Particles After Complete Curing)

Functional fine particles are preferably dispersed more in a surface layer than in a deeper layer of a hard coat layer after complete curing. When employing an inclined structure in which functional fine particles are dispersed more in a surface layer than in a deeper layer of a hard coat layer after complete curing, the transparency is favorable and excellent adhesion between layers is obtained, which is preferable.

Regarding preferable volume ratios of functional fine particles, the volume ratio (A) of the functional fine particles within 0.1 μm from the surface of the hard coat layer is from 1.0 to 35%, and the volume ratio (B) of the functional fine particles within 0.1 μm from an interface on the opposite side of the surface of the hard coat layer is from 0.01% to 5%, and (B)/(A) is 0.25 or less. The volume ratio (A) may be from 2 to 20% or from 4 to 10%, and the volume ratio (B) may be from 0.05 to 3% or from 0.1% to 1%, and (B)/(A) may be from 0.01 to 0.2 or from 0.05 to 0.15.

Here, for the volume ratio of functional fine particles, TEM measurement of the cross section perpendicular to the longitudinal direction of a layered body is performed, and the area ratio of functional fine particles within 0.1 μm from the surface of a hard coat layer and functional fine particles within 0.1 μm from an interface on the opposite side of the surface of the hard coat layer is read as the volume ratio.

The surface of functional fine particles of a surface layer is preferably partially exposed, and the exposure rate is preferably from 5 to 50%, and further preferably from 10 to 30%. When the exposure rate is within such ranges, the functional fine particles do not drop out of a coat layer and therefore are able to exhibit their functions, which is preferable.

Here, the exposure rate is defined as, when functional fine particles are observed in a TEM image of a cross section of a coat layer, the average value of ratios of diameters of particles exposed from the surface of the hard coat layer to the diameter of the particles. This average value is calculated by extracting 200 representative functional fine particles from a plurality of TEM images.

<<Substrate with Hard Coat Layer>>

The substrate with a hard coat layer according to the present invention includes: a substrate; and a hard coat layer containing functional fine particles, and the volume ratio (A) of the functional fine particles within 0.1 μm from the surface of the hard coat layer is from 1.0 to 35%, and the volume ratio (B) of the functional fine particles within 0.1 μm from an interface on the opposite side of the surface of the hard coat layer is from 0.01% to 5.0%, and (B)/(A) is 0.25 or less. Herein, for the volume ratio of functional fine particles, TEM measurement of the cross section perpendicular to the longitudinal direction of a substrate with a hard coat layer is performed, and the area ratio of functional fine particles within 0.1 μm from the surface of a hard coat layer and functional fine particles within 0.1 μm from an interface on the opposite side of the surface of the hard coat layer is set to the volume ratio.

The substrate with a hard coat layer of the present invention may have an adhesive layer between the substrate and the hard coat layer. Another layer may be present between any layers of the substrate, any optional adhesive layer, and the hard coat layer. When no other layer is present and an adhesive layer is present, the expression "interface opposite to the surface of a hard coat layer" means an interface between a hard coat layer and an adhesive layer, and when no other layer and adhesive layer are present, the expression means an interface between the hard coat layer and the substrate.

For each configuration of the substrate with a hard coat layer of the present invention, reference may be made to each of the configurations described above with respect to the method of producing a substrate with a hard coat layer of the present invention.

(Applications)

The substrate with a hard coat layer of the present invention and a substrate with a hard coat layer obtained by the method of the present invention maintain sufficient properties and wear resistance of functional fine particles and have favorable adhesion between layers even when exposed to the open air for a long period of time, and therefore, examples of applications thereof can include an optical member used outdoors such as a lens, a fluid resistance reduction component (such as a shark skin surface), an organism (such as an algae) attachment prevention component, and a surface resistance reduction member.

## EXAMPLES

The present invention will be described in detail by way of Examples, but is not limited thereto as long as the spirit of the present invention is not exceeded. The physical properties of Examples and Comparative Examples were measured according to the following method.

### (I) Measurement Items

### (I-1) Measurement of X in Formula (a)

Time in second required for the (Δ) haze of a glass with a semi-cured hard coat layer to exceed 5% when the glass with the semi-cured hard coat layer is obtained by layering a 10 μm-thick, semi-cured hard coat layer on one side of 3 mm-thick float-processed soda glass; and then thus obtained glass with the semi-cured hard coat layer is immersed in an *N*-methylpyrrolidone solvent in an environment of 40°C was set to X.

### (1-2) Measurement of Average Primary Particle Size of Functional Fine Particles

Of functional fine particles identified in a TEM measurement image of a cross section of a hard coat layer, the long and short diameters were measured for any 10 functional fine particles determined from the image, and the radius of each functional fine particle was defined as (long diameter + short diameter)/4, and the average primary particle diameter was defined as the additive average of radii × 2 of 10 fine particles.

(I-3) Ratio of Functional fine particles in Surface Layer (A) of Hard Coat Layer

TEM measurement of a cross section perpendicular to the longitudinal direction of a layered body was carried out, and the area ratio of fine particles contained within 0.1 μm from the surface of a hard coat layer was measured, and the ratio was defined as the volume ratio.

(I-4) Ratio of Functional fine particles in Deeper Layer (B) of Hard Coat Layer

TEM measurement of a cross section perpendicular to the longitudinal direction of a layered body was carried out, and the area ratio of fine particles contained within 0.1 μm from an interface between a substrate or an adhesive layer and a hard coat layer was measured, and the ratio was defined as the volume ratio.

(II) Evaluation of Initial Properties

(II-1) Visual Appearance Evaluation

A light transmissive resin substrate with a completely cured hard coat layer was considered favorable when there were no cracks or whitening on the surface. When cracks or whitening were observed, the degree of cracks or whitening was evaluated qualitatively by visual observation.

(II-2) Total Light Transmittance

A square test piece of 100 mm square on one side was cut out from a light transmissive resin substrate with a completely cured hard coat layer, and the haze of the test piece was evaluated using a turbidimeter NDH 2000 manufactured by NIPPON DENSHOKU INDUSTRIES CO., LTD. The evaluation was carried out in accordance with JIS K7361-1.

(II-3) Haze

A square test piece of 100 mm square on one side was cut out from a completely cured light transmissive resin substrate with a hard coat layer, and the haze of the test piece was evaluated using a turbidimeter NDH 2000 manufactured by NIPPON DENSHOKU INDUSTRIES CO., LTD. The evaluation was carried out in accordance with JIS K7136.

$$(\text{Haze} = \text{Td}/\text{Tt} \times 100,\ \text{Td: Scattering light transmittance (\%)},\ \text{Tt: Total light transmittance (\%)})$$

(II-4) Wear Resistance

In accordance with ASTM D 1044-05, a Taber abrasion test was performed on a coating surface of the square test piece used for the above-described haze evaluation using a CS-10F abrasion wheel manufactured by Calibrase Corporation at 500 rpm with a load of 500 g, and the ΔH between the haze before the Taber abrasion test and the haze after the Taber abrasion test was measured. For such an evaluation, a smaller ΔH is preferable. An abrasion wheel was refaced with abrasive paper ST-11 at 25 rpm.

(II-5) Adhesion

Using a utility knife, 11 parallel lines at an interval of 1 mm were drawn on a coating surface, similar parallel lines perpendicular to the parallel lines were drawn to form a lattice of 100 squares, a CELLOTAPE (registered trademark) manufactured by Nichiban Corporation Ltd. was pressed onto the lattice, and the CELLOTAPE was pulled off strongly in a vertical direction, and the number of squares left on the substrate was counted. The lower the number, the more favorable adhesion the coating has, which is preferable.

(II-6) Water Contact Angle

The water contact angle was measured by the 3-point-designated arc approximation method using a contact angle meter DM301 manufactured by Kyowa Interface Science Co., Ltd. The higher the contact angle, the more favorable the water repellency, which is a function of the hydrophobic silica used as an example of functional fine particles.

(II-7) Surface Resistance

The surface resistance was measured by the 4-terminal method using a surface resistivity meter MEGARESTA II manufactured by Shidodo Electrostatic, Ltd. The lower the surface resistance, the more favorable the antistatic performance, which is a function of an ATO used as an example of functional fine particles.

(III) Long-term Environmental Resistance Test

(III-1) Hot Water Resistance

A rectangular test piece of 50 × 100 mm square is cut out of a light transmissive resin substrate with a completely cured hard coat layer, the test piece was immersed in boiling water for 8 hours, and the appearance of the substrate was visually determined to see if the substrate was not cloudy, the coat layer was not peeling off, and the coat layer was not cracked. The adhesion was also evaluated. The evaluation method thereof was the same as the evaluation method described in (II-5) of the initial properties.

(III-2) High-temperature Environment Durability

A rectangular test piece cut out in the same manner as in the above-described hot water resistance test was left in a 110°C environment for 1,000 hours, the test piece was taken out, and then the appearance was visually checked. The adhesion was also evaluated. The evaluation method thereof was performed in the same manner as described in Initial Properties.

(III-3) Environment Cycle Test

The appearance and adhesion of a rectangular test piece, cut out in the same manner as in the above-described hot water resistance test, were evaluated after 30 cycles of continuous storage of (i) 4 hours at 80°C and 80% relative humidity, (ii) 1 hour at 25°C and 50% relative humidity, (iii) 4 hours at -15°C, and (iv) 1 hour at 25°C and 50% relative humidity. The evaluation method thereof was performed in the same way as described in the Initial Properties.

(III-4) Water Contact Angle After Outdoor Exposure Test

A rectangular test piece, cut out in the same manner as in the above-described hot water resistance test, was placed on a test stand set up outdoors at a 36° angle of inclination facing south, and the appearance and water contact angle were evaluated after 1, 3, and 12 months. The evaluation method thereof was performed in the same manner as described in Initial Properties. The more difficult it is for the water contact angle to decrease after the outdoor exposure test, the more likely it is that functional fine particles are present on the surface without slipping, meaning that the water repellency performance, which is a function of hydrophobic silica used as an example of the functional fine particles, is maintained.

(III-5) Surface Resistance After Outdoor Exposure Test

A rectangular test piece, cut out in the same manner as in the above-described hot water resistance test, was placed on a test stand set up outdoors at a 36° angle of inclination facing south, and the surface resistance was measured after 1, 3, and 12 months. The evaluation method thereof was performed in the same manner as described in Initial Properties. The more difficult it is for the surface resistance to increase after the outdoor exposure test, the more likely it is that functional fine particles are present on the surface without slipping, meaning that the antistatic performance, which is a function of antistatic fine particles used as an example of the functional fine particles, is maintained.

(IV) Preparation of Hard Coating Agent

<Method of Preparing Precursor Material Liquid for Heat-curable Siloxane Resin Hard Coat Layer (T-1)>

Eighty parts by weight of a water-dispersion type colloidal silica dispersion (Cataloid SN-30 manufactured by Catalysts and Chemicals Industries Co., Ltd., particle size of about 17 nm, solid content concentration of 30% by weight) was added to 127 parts by weight of methyl trimethoxysilane under cooling in an ice water bath. This liquid mixture was stirred at 25°C for 1 and a half hours, and then stirred at 60°C for 4 hours to obtain a reaction liquid, which was cooled in ice water and mixed with 24 parts by weight of acetic acid and 2 parts by weight of sodium acetate as a curing catalyst

under ice water cooling to obtain a precursor material liquid for forming a heat-curable siloxane resin layer (T-1).

<Method of Preparing Precursor Material Liquid for Ultraviolet-curable Acrylic Resin Hard Coat Layer (UVHC-1)>

200 parts by weight of tetrafunctional acrylate (Aronix M305 manufactured by Toagosei Co., Ltd., 200 parts by weight of trifunctional acrylate (Aronix M315 manufactured by Toagosei Co., Ltd., 100 parts by weight of bifunctional acrylate (light acrylate DCP-A manufactured by Kyoeisha Chemical Co., Ltd., 15 parts by weight of reactive HALS (LA-82 manufactured by ADEKA Corporation), 294 parts by weight of surface-modified colloidal silica (MEK-AC-2140Z manufactured by Nissan Chemical Industries, Ltd., 25 parts by weight of a photoinitiator (Irgacure 184 manufactured by BASF), 1284 parts by weight of methoxypropanol, and 642 parts by weight of 2-propanol were added to a flask and stirred to prepare a precursor material liquid for ultraviolet-curable acrylic resin hard coat layer (UVHC-1).

<Method of Preparing Precursor Material Liquid for Ultraviolet-curable Acrylic Resin Hard Coat Layer (UVHC-2)>

100 parts by weight of UV curable acrylic hard coat agent Seika Beam EXF-01L (manufactured by Dainichiseika Color & Chemicals Mfg. Co., Ltd., with a solid content concentration of 100%) and 100 parts by weight of isobutanol (hereinafter abbreviated as "IBA") were added to a beaker and stirred to prepare a precursor material liquid for ultraviolet-curable acrylic resin hard coat layer (UVHC-2).

(V) Preparation of Functional Fine Particles Dispersion

< Preparation of Fluorinating Agent-capped Hydrophobic Colloidal Silica (HS-1)>

10 parts by weight of hydrophobically treated colloidal silica (PL-1-Tol 40wt% toluene dispersion) manufactured by FUSO CHEMICAL CO., LTD. was diluted with 40 parts by weight of toluene, 50 parts by weight of methoxypropanol, and 40 parts by weight of ethanol, and 0.2 parts by weight of a fluorinating agent (PO-2-OH manufactured by UNIMATEC CO., LTD.) and 0.1 parts by weight of phosphorus pentoxide were added thereto, and the mixture was stirred at room temperature for 48 hours to remove remaining phosphorus pentoxide by filtration to obtain a 4% by weight dispersion of fluorinating agent-capped hydrophobic colloidal silica (HS-1).

<Preparation of Fluorinating Agent-capped Hydrophobic Colloidal Silica (HS-2)>

10 parts by weight of organic solvent-dispersed colloidal silica (trade name: IPA-ST, 30% by weight 2-propanol dispersion) manufactured by Nissan Chemical Industries, Ltd. was diluted with 65 parts by weight of 2-propanol, and 0.1 parts by weight of a fluorinating agent (FC-431 manufactured by 3M Company) and 0.1 parts by weight of phosphorus pentoxide were added thereto, and the mixture was stirred at room temperature for 48 hours to remove remaining phosphorus pentoxide by filtration to obtain a 4% by weight 2-propanol dispersion of fluorinating agent-capped hydrophobic colloidal silica (HS-2).

<Preparation of Resin Component-containing Fluorinating Agent-capped Hydrophobic Colloidal Silica (HS-3)>

30 parts by weight of the above-described fluorinating agent-capped hydrophobic colloidal silica (HS-1), 4 parts by weight of a precursor material liquid for ultraviolet-curable acrylic resin hard coat layer (UVHC-1), and 166 parts by weight of 2-propanol were added to a flask and stirred to obtain fluorinating agent-capped hydrophobic colloidal silica (HS-3). HS-3 had a solid content of 1% by weight, and the ratio of binder to functional fine particles in the solid content was 40:60.

<Preparation of Resin Component-containing Fluorinating Agent-capped Hydrophobic Colloidal Silica (HS-4)>

450 parts by weight of the above-described fluorinating agent-capped hydrophobic colloidal silica (HS-1) was added to a flask, 6 parts by weight of a curing agent-containing ultraviolet-curable acrylic hard coat agent SEIKA BEAM EXF-01L, and 344 parts by weight of IBA were added to a beaker and stirred to obtain fluorinating agent-capped hydrophobic colloidal silica (HS-4). HS-4 had a solid content of 3% by weight, and the ratio of binder to functional fine particles in the solid content was 25:75.

<Preparation of Resin Component-containing ATO (HA-1)>

100 parts by weight of a curing agent-containing ultraviolet-curable acrylic hard coat agent SEIKA BEAM EXF-01L, 1000 parts by weight of ATO fine particle IBA dispersion (SN-100P manufactured by Ishihara Techno Corporation, solid content concentration 30%) having a particle size of 0.1 μm, and 12233 parts by weight of IBA were added to a beaker and stirred to prepare a resin component-containing ATO (HA-1).

(VI) Preparation of Composition for Adhesive Layer

<Method of Preparing Precursor Material Liquid for Heat-curable Acrylic Resin Adhesive Layer (P-1)>

79.9 parts by weight of ethyl methacrylate (hereinafter referred to as "EMA"), 33.6 parts by weight of cyclohexyl methacrylate (hereinafter referred to as CHMA), 13.0 parts by weight of 2-hydroxyethyl methacrylate (hereinafter referred to as HEMA), 126.6 parts by weight of methyl isobutyl ketone (hereinafter referred to as MIBK), and 63.3 parts by weight of 2-butanol (hereinafter referred to as 2-BuOH) were added and mixed in a nitrogen-substituted flask equipped with a reflux condenser and a stirrer. After deoxygenating the mixture with nitrogen gas for 15 minutes, the temperature was raised to 70°C under nitrogen gas flow, 0.33 parts by weight of azobisisobutyronitrile (hereinafter referred to as AIBN) was added thereto, and reacted under stirring at 70°C for 5 hours in a nitrogen gas stream. 0.08 parts by weight of AIBN was added, and the temperature was raised to 80°C, and the mixture was reacted for 3 hours to obtain an acrylic copolymer solution with a non-volatile content of 39.6% by weight. The weight average molecular weight of the acrylic copolymer was 125,000 in terms of polystyrene from GPC measurement (column; Shodex GPCA-804, eluent; chloroform).

Subsequently, to 100 parts by weight of the acrylic copolymer solution, 43.2 parts by weight of MIBK, 21.6 parts by weight of 2-BuOH, and 83.5 parts by weight of 1-methoxy-2-propanol were added and mixed, 5.3 parts by weight of TINUVIN 400 (triazine-based ultraviolet absorber manufactured by Ciba Specialty Chemicals Inc., and further 10.6 parts by weight of VESTANAT B1358/100 (polyisocyanate compound precursor manufactured by Degussa Japan K.K.) was added to obtain an equivalent amount of an isocyanate group to 1.0 part by weight of a hydroxy group of acrylic copolymer in the acrylic resin solution, and then 0.015 parts by weight of tin dimethyldinedecanoate (DMDNT) was added and stirred for 1 hour at 25°C to prepare a precursor liquid for an adhesive layer consisting mainly of an acrylic copolymer resin (P-1).

[Example 1]

Polycarbonate resin (TEIJIN LIMITED, Panlite L1250Z) was fed into an injection press molding machine to obtain a transparent polycarbonate resin sheet with a thickness of 4 mm and a size of 550 mm square.

The polycarbonate resin sheet as a substrate was dip-coated with a precursor liquid for heat-curable acrylic resin adhesive layer (P-1) on both sides of the sheet, and after air-drying, the sheet was heat-cured at 120°C for 1 hour to form an adhesive layer with a film thickness of about 8 μm on both sides of the polycarbonate substrate.

Subsequently, a precursor material liquid for forming a heat-curable siloxane resin layer (T-1) was dip-coated, air-dried for 20 minutes at 23°C, 50% RH, and then heat-dried at 120°C for 2 minutes (semi-curing of a siloxane resin layer), and then a dispersion of the previously obtained HS-1 dispersed in a toluene/methoxypropanol = 1/1 mixture of solvents was poured over the surface of the siloxane resin layer to impregnate it with a fluorinating agent-capped hydrophobic colloidal silica by a flowcoat method. A solvent was allowed to volatilize by air-drying for another 15 minutes in that condition, and then heat cured at 120°C for 1 hour to obtain a fluorinating agent-capped hydrophobic colloidal silica surface-dispersed heat-curable siloxane resin hard-coated polycarbonate substrate.

[Examples 2 to 10, Comparative Examples 1 to 11, and 14]

A resin substrate with a hard coat layer was produced by the same method as in Example 1 except that the conditions listed in Table 1 and Table 3 were changed.

[Example 11]

A 4 mm-thick transparent polycarbonate resin sheet was coated with a precursor material liquid for ultraviolet-curable acrylic resin hard coat layer (UVHC-1) by a flowcoat method, air-dried at 23°C, 50% RH for 10 minutes, and then heat dried at 80°C for 1 minute to further volatilize the remaining solvent, ultraviolet light with an intensity of 500 $mW/cm^2$ in the UV-A area was irradiated for 0.2 seconds at an integrated dose of 100 mJ/cm2 using a high-pressure mercury lamp light source to partially cure the liquid, and a fluorinating agent-capped hydrophobic colloidal silica dispersion (HS-1) was applied to the surface by a flowcoat method to impregnate the surface of the acrylic resin hard coat layer with fluorinating agent-capped hydrophobic colloidal silica. The acrylic resin hard coat layer was then air-dried for 5 minutes at 23°C, 50% RH, and then heat dried at 80°C for 1 minute to further volatilize the remaining solvent, and the

acrylic resin hard coat layer was completely cured by irradiating with 500 mW/$cm^2$ ultraviolet light in the UV-A area for 2 seconds using a high-pressure mercury lamp light source at an integrated irradiance of 1000 mJ/$cm^2$ to obtain a fluorinating agent-capped hydrophobic colloidal silica surface-dispersed acrylic resin hard coated polycarbonate substrate.

[Examples 12 to 16, Comparative Examples 12, 13, 15 to 18]

A resin substrate with a hard coat layer was produced in the same manner as in Example 11 except that the conditions listed in Table 1, Table 3, and Table 5 were changed.

Comparative Example 16 is a result of a semi-cured hard coat layer and completely cured hard coat layer under the conditions described in Examples of the prior art Document 2, and although the initial properties were favorable, a favorable long-term environmental resistance was not obtained.

[Table 1]

[Table 1]

| | Adhesive layer | Hard coat layer | Initial curing condition | Initial cured layer NMP immersion endurance time (sec.) (X) | Functional fine particles dispersion | | | | | | X × $(A+0.2)^2$ | Final curing condition | Functional fine particles ratio | | |
|---|---|---|---|---|---|---|---|---|---|---|---|---|---|---|---|
| | | | | | Fine particle type | Average primary particle size (n m) | Concentration (wt%) | Dispersion medium | | | | | Surface layer (A) | Deeper layer (B) | Ratio between deeper layer and surface layer (B)/(A) |
| | | | | | | | | Type | Sp value | Sp value difference from NMP (A) | | | | | |
| Example 1 | P-1 | T-1 | 23°C 20 minutes -> 120°C 2 minutes | 150 | HS-1 | 15 | 1 | Tol/PMA | 22.1 | 0.2 | 24 | 120°C 1 hour | 6 | 0.3 | 0.050 |
| Example 2 | P-1 | T-1 | 23°C 20 minutes -> 120°C 10 minutes | 500 | HS-1 | 15 | 1 | Tol/PMA | 22.1 | 0.2 | 80 | 120°C 1 hour | 10 | 0.1 | 0.010 |
| Example 3 | P-1 | T-1 | 23°C 1 hour | 100 | HS-1 | 15 | 1 | Tol/PMA | 22.1 | 0.2 | 16 | 120°C 1 hour | 3 | 0.5 | 0.167 |
| Example 4 | P-1 | T-1 | 23°C 1 hour | 100 | HS-1 | 15 | 1 | PMA | 22.7 | 0.4 | 36 | 120°C 1 hour | 8 | 0.2 | 0.025 |
| Example 5 | P-1 | T-1 | 23°C 20 minutes | 50 | HS-1 | 15 | 1 | PMA | 22.7 | 0.4 | 18 | 120°C 1 hour | 3 | 0.5 | 0.167 |
| Example 6 | P-1 | T-1 | 23°C 20 minutes | 50 | HS-2 | 12 | 1 | IPA | 23.1 | 0.8 | 50 | 120°C 1 hour | 8 | 0.2 | 0.025 |
| Example 7 | P-1 | T-1 | 23°C 5 minutes | 15 | HS-2 | 12 | 1 | IPA | 23.1 | 0.8 | 15 | 120°C 1 hour | 3 | 0.5 | 0.167 |
| Example 8 | P-1 | T-1 | 23°C 10 minutes | 30 | HS-2 | 12 | 1 | IPA | 23.1 | 0.8 | 30 | 120°C 1 hour | 4 | 0.4 | 0.100 |
| Example 9 | P-1 | T-1 | 23°C 5 minutes | 15 | HS-2 | 12 | 0.5 | IPA | 23.1 | 0.8 | 15 | 120°C 1 hour | 1.8 | 0.2 | 0.111 |

(continued)

| | Adhesive layer | Hard coat layer | Initial curing condition | Initial cured layer NMP immersion endurance time (sec.) (X) | Functional fine particles dispersion | | | | | | X × $(A+0.2)^2$ | Final curing condition | Functional fine particles ratio | | |
|---|---|---|---|---|---|---|---|---|---|---|---|---|---|---|---|
| | | | | | Fine particle type | Average primary particle size (n m) | Concentration (wt%) | Dispersion medium | | | | | Surface layer (A) | Deeper layer (B) | Ratio between deeper layer and surface layer (B)/(A) |
| | | | | | | | | Type | Sp value | Sp value difference from NMP (A) | | | | | |
| Example 10 | P-1 | T-1 | 23°C 5 minutes | 15 | HS-2 | 12 | 2 | IPA | 23.1 | 0.8 | 15 | 120°C 1 hour | 5 | 0.8 | 0.160 |
| Example 11 | None | UVHC-1 | 23°C 10 minutes -> 80°C 1 minute high-pressure mercury lamp 100 $mJ/cm^2$ | 40 | HS-2 | 12 | 4 | IPA | 23.1 | 0.8 | 40 | high-pressure mercury lamp 1000 $mJ/cm^2$ | 7 | 0.9 | 0.129 |
| Example 12 | None | UVHC-1 | 23°C 10 minutes -> 80°C 1 minute high-pressure mercury lamp 200 $mJ/cm^2$ | 60 | HS-2 | 12 | 4 | IPA | 23.1 | 0.8 | 60 | high-pressure mercury lamp 1000 $mJ/cm^2$ | 9 | 0.4 | 0.044 |

(continued)

| | Adhesive layer | Hard coat layer | Initial curing condition | Initial cured layer NMP immersion endurance time (sec.) (X) | Functional fine particles dispersion | | | | | | X × $(A+0.2)^2$ | Final curing condition | Functional fine particles ratio | | |
|---|---|---|---|---|---|---|---|---|---|---|---|---|---|---|---|
| | | | | | Fine particle type | Average primary particle size (n m) | Concentration (wt%) | Dispersion medium | | | | | Surface layer (A) | Deeper layer (B) | Ratio between deeper layer and surface layer (B)/(A) |
| | | | | | | | | Type | Sp value | Sp value difference from NMP (A) | | | | | |
| Example 13 | None | UVHC-1 | 23°C 10 minutes -> 80°C 1 minute high-pressure mercury lamp 300 $mJ/cm^3$ | 80 | HS-2 | 12 | 4 | IPA | 23.1 | 0.8 | 80 | high-pressure mercury lamp 1000 $mJ/cm^2$ | 10 | 0.1 | 0.010 |
| Example 14 | None | UVHC-1 | 23°C 10 minutes -> 80°C 1 minute high-pressure mercury lamp 200 $mJ/cm^2$ | 60 | HS-2 | 12 | 1 | IPA | 23.1 | 0.8 | 60 | high-pressure mercury lamp 1000 $mJ/cm^2$ | 5 | 0.2 | 0.040 |

(continued)

| | Adhesive layer | Hard coat layer | Initial curing condition | Initial cured layer NMP immersion endurance time (sec.) (X) | Functional fine particles dispersion | | | | | | $X \times (A+0.2)^2$ | Final curing condition | Functional fine particles ratio | | |
|---|---|---|---|---|---|---|---|---|---|---|---|---|---|---|---|
| | | | | | Fine particle type | Average primary particle size (n m) | Concentration (wt%) | Dispersion medium | | | | | Surface layer (A) | Deeper layer (B) | Ratio between deeper layer and surface layer (B)/(A) |
| | | | | | | | | Type | Sp value | Sp value difference from NMP (A) | | | | | |
| Example 15 | None | UVHC-1 | 23°C 10 minutes -> 80°C 1 minute high-pressure mercury lamp 200 mJ/ $cm^2$ | 80 | HS-3 | 12 | 1 | UVHC-1 | 22.7 | 0.4 | 28.8 | high-pressure mercury lamp 1000 mJ/$cm^2$ | 5 | 0.4 | 0.080 |

Tol: Toluene PMA: Methoxy Propanol IPA: Isopropanol IBA: 2-methyl-1-propanol

[Table 2]

| | Initial property evaluation | | | | | | Long-term environmental resistance evaluation | | | | | | | | |
|---|---|---|---|---|---|---|---|---|---|---|---|---|---|---|---|
| | Visual appearance evaluation | TT (%) | Haze (%) | wear resistance (ΔH) | Adhesion | Water contact angle (°) | Hot water resistance | | High-temperature environment durability | | Environment cycle test | | Water contact angle after outdoor exposure test (°) | | |
| | | | | | | | Appearance | Adhesion | Appearance | Adhesion | Appearance | Adhesion | 1M | 3M | 12M |
| Example 1 | Favorable | 90.3 | 0.4 | 1.9 | 100/100 | 110 | Favorable | 100/100 | Favorable | 100/100 | Favorable | 100/100 | 110 | 108 | 106 |
| Example 2 | Favorable | 90.4 | 0.6 | 2.1 | 100/100 | 132 | Favorable | 100/100 | Favorable | 100/100 | Favorable | 100/100 | 120 | 120 | 105 |
| Example 3 | Favorable | 90.4 | 0.8 | 2.2 | 100/100 | 105 | Favorable | 100/100 | Favorable | 100/100 | Favorable | 100/100 | 105 | 104 | 104 |
| Example 4 | Favorable | 90.4 | 0.5 | 2.1 | 100/100 | 115 | Favorable | 100/100 | Favorable | 100/100 | Favorable | 100/100 | 115 | 112 | 108 |
| Example 5 | Favorable | 90.4 | 0.6 | 1.9 | 100/100 | 105 | Favorable | 100/100 | Favorable | 100/100 | Favorable | 100/100 | 112 | 110 | 108 |
| Example 6 | Favorable | 90.4 | 0.6 | 2.1 | 100/100 | 120 | Favorable | 100/100 | Favorable | 100/100 | Favorable | 100/100 | 120 | 115 | 112 |
| Example 7 | Favorable | 90.5 | 0.8 | 1.8 | 100/100 | 105 | Favorable | 100/100 | Favorable | 100/100 | Favorable | 100/100 | 105 | 102 | 100 |
| Example 8 | Favorable | 90.4 | 0.5 | 2.1 | 100/100 | 115 | Favorable | 100/100 | Favorable | 100/100 | Favorable | 100/100 | 115 | 112 | 110 |
| Example 9 | Favorable | 90.5 | 0.7 | 2.4 | 100/100 | 105 | Favorable | 100/100 | Favorable | 100/100 | Favorable | 100/100 | 104 | 102 | 100 |
| Example 10 | Favorable | 90.4 | 0.9 | 1.6 | 100/100 | 110 | Favorable | 95/100 | Favorable | 100/100 | Favorable | 100/100 | 110 | 108 | 108 |
| Example 11 | Favorable | 89.8 | 0.8 | 2.5 | 100/100 | 115 | Favorable | 95/100 | Favorable | 100/100 | Favorable | 100/100 | 115 | 110 | 105 |
| Example 12 | Favorable | 89.7 | 0.7 | 2.4 | 100/100 | 120 | Favorable | 100/100 | Favorable | 100/100 | Favorable | 100/100 | 120 | 115 | 110 |
| Example 13 | Favorable | 89.8 | 0.8 | 2.6 | 100/100 | 128 | Favorable | 100/100 | Favorable | 100/100 | Favorable | 100/100 | 126 | 120 | 105 |

(continued)

| | Initial property evaluation | | | | | | Long-term environmental resistance evaluation | | | | | | | | |
|---|---|---|---|---|---|---|---|---|---|---|---|---|---|---|---|
| | Visual appearance evaluation | TT (%) | Haze (%) | wear resistance ($\Delta H$) | Adhesion | Water contact angle (°) | Hot water resistance | | High-temperature environment durability | | Environment cycle test | | Water contact angle after outdoor exposure test (°) | | |
| | | | | | | | Appearance | Adhesion | Appearance | Adhesion | Appearance | Adhesion | 1M | 3M | 12M |
| Example 14 | Favorable | 89.8 | 0.5 | 2.4 | 100/100 | 105 | Favorable | 100/100 | Favorable | 100/100 | Favorable | 100/100 | 103 | 102 | 98 |
| Example 15 | Favorable | 89.4 | 0.6 | 2.5 | 100/100 | 115 | Favorable | 100/100 | Favorable | 100/100 | Favorable | 100/100 | 103 | 102 | 98 |

[Table 3]

| | | | | | Functional fine particles dispersion | | | | | | | | Functional fine particles ratio | | |
|---|---|---|---|---|---|---|---|---|---|---|---|---|---|---|---|
| | | | | | | | | Dispersion medium | | | | | | | |
| | Adhesive layer | Hard coat layer | Initial curing condition | Initial cured layer NMP immersion endurance time (sec.) (X) | Fine particle type | Average primary particle size (nm) | concentration (wt%) | Type | Sp value | Difference between NMP and Sp value (A) | $X \times (A + 0.2)^2$ | Final curing condition | Surface layer (A) | Deeper layer (B) | Ratio between deeper layer and surface layer (B)/(A) |
| Comparative Example 1 | P-1 | T-1 | 0 minutes (immediately after coating) | 5 | HS-1 | 15 | 1 | IPA | 23.1 | 0.8 | 5 | 120°C 1 hour | 1.6 | 1 | 0.625 |
| Comparative Example 2 | P-1 | T-1 | 23°C 2 minutes | 10 | HS-1 | 15 | 1 | IPA | 23.1 | 0.8 | 10 | 120°C 1 hour | 2 | 0.8 | 0.400 |
| Comparative Example 3 | P-1 | T-1 | 23°C 60 minutes 23°C 20 minutes | 100 | HS-1 | 15 | 1 | IPA | 23.1 | 0.8 | 100 | 120°C 1 hour | 12 | 0 | 0.000 |
| Comparative Example 4 | P-1 | T-1 | -> 120°C 10 minutes 23°C 20 minutes | 500 | HS-1 | 15 | 1 | IPA | 23.1 | 0.8 | 500 | 120°C 1 hour | 12 | 0 | 0.000 |
| Comparative Example 5 | P-1 | T-1 | -> 120°C 20 minutes 23°C 20 minutes | 900 | HS-1 | 15 | 1 | PMA | 22.7 | 0.4 | 324 | 120°C 1 hour | 12 | 0 | 0.000 |
| Comparative Example 6 | P-1 | T-1 | -> 120°C 12 minutes | 650 | HS-1 | 15 | 1 | Tol/PMA | 22.1 | 0.2 | 104 | 120°C 1 hour | 12 | 0 | 0.000 |
| Comparative Example 7 | P-1 | T-1 | 23°C 40 minutes 23°C 20 minutes | 70 | HS-1 | 15 | 1 | Tol/PMA | 22.1 | 0.2 | 11.2 | 120°C 1 hour | 2.5 | 0.7 | 0.280 |
| Comparative Example 8 | P-1 | T-1 | -> 120°C 10 minutes | 500 | HS-1 | 15 | 1 | PMA | 22.7 | 0.4 | 180 | 120°C 1 hour | 12 | 0 | 0.000 |
| Comparative Example 9 | P-1 | T-1 | 23°C 2 minutes | 10 | HS-1 | 15 | 1 | PMA | 22.7 | 0.4 | 3.6 | 120°C 1 hour | 1 | 1 | 1.000 |

(continued)

| | Adhesive layer | Hard coat layer | Initial curing condition | Initial cured layer NMP immersion endurance time (sec.) (X) | Functional fine particles dispersion | | | | | | $X \times (A + 0.2)^2$ | Final curing condition | Functional fine particles ratio | | |
|---|---|---|---|---|---|---|---|---|---|---|---|---|---|---|---|
| | | | | | Fine particle type | Average primary particle size (nm) | concentration (wt%) | Dispersion medium | | | | | Surface layer (A) | Deeper layer (B) | Ratio between deeper layer and surface layer (B)/(A) |
| | | | | | | | | Type | Sp value | Difference between NMP and Sp value (A) | | | | | |
| Comparative Example 10 | P-1 | T-1 | 23°C 10 minutes 23°C 20 minutes | 30 | HS-1 | 15 | 1 | PMA | 22.7 | 0.4 | 10.8 | 120°C 1 hour | 2 | 0.8 | 0.400 |
| Comparative Example 11 | P-1 | T-1 | -> 120°C 6 minutes | 300 | HS-1 | 15 | 1 | PMA | 22.7 | 0.4 | 108 | 120°C 1 hour | 12 | 0 | 0.000 |
| Comparative Example 12 | None | UVHC-1 | 23°C 10 minutes -> 80°C 1 minute | 5 | HS-1 | 15 | 1 | IPA | 23.1 | 0.8 | 5 | high-press ure mercury lamp 1000 $mJ/cm^2$ | 0.5 | 6 | 12.000 |
| Comparative Example 13 | None | UVHC-1 | 23°C 10 minutes -> 80°C 1 minute high-pressure mercury lamp 500 $mJ/cm^3$ | 120 | HS-1 | 15 | 1 | IPA | 23.1 | 0.8 | 120 | high-press ure mercury lamp 1000 $mJ/cm^2$ | 12 | 0 | 0.000 |
| Comparative Example 14 | P-1 | T-1 | 23°C 20 minutes->120°C 15 minutes | 900 | HS-1' | 15 | 1 | Tol/PMA/IPA | 22.3 | 0 | 36 | 120°C 1 hour | 12 | 0 | 0.000 |
| Comparative Example 15 | None | UVHC-1 | 23°C 10 minutes -> 80°C 1 minute | 5 | HS-2' | 15 | 1 | IP A/water | 23.9 | 1.6 | 16.2 | high-press ure mercury lamp $mJ/cm^2$ | 0.5 | 6 | 12.000 |

(continued)

| | Adhesive layer | Hard coat layer | Initial curing condition | Initial cured layer NMP immersion endurance time (sec.) (X) | Functional fine particles dispersion | | | | | | $X \times (A + 0.2)^2$ | Final curing condition | Functional fine particles ratio | | |
|---|---|---|---|---|---|---|---|---|---|---|---|---|---|---|---|
| | | | | | Fine particle type | Average primary particle size (nm) | concentration (wt%) | Dispersion medium | | | | | Surface layer (A) | Deeper layer (B) | Ratio between deeper layer and surface layer (B)/(A) |
| | | | | | | | | Type | Sp value | Difference between NMP and Sp value (A) | | | | | |
| Comparative Example 16 | None | UVHC-2 | high-pressure mercury lamp 50 mJ/cm$^2$ | 100 | HS-4 | 15 | 3 | IBA | 21.5 | 0.8 | 200 | High-press ure mercury lamp 700 mJ/cm$^2$ | 8 | 0 | 0.000 |

[Table 4]

| | Initial property evaluation | | | | | | Long-term environmental resistance evaluation | | | | | | | | |
|---|---|---|---|---|---|---|---|---|---|---|---|---|---|---|---|
| | Visual appearance evaluation | TT (%) | Haze (%) | wear resistance (ΔH) | Adhesion | Water contact angle (°) | Hot water resistance | | High-temperature environment durability | | Environment cycle test | | Water contact angle after outdoor exposure test (°) | | |
| | | | | | | | Appearance | Adhesion | Appearance | Adhesion | Appearance | Adhesion | 1M | 3M | 12M |
| Comparative Example 1 | Slightly whiten | 90.4 | 3.5 | 2.1 | 100/100 | 90 | Favorable | 0/100 | Favorable | 100/100 | Favorable | 50/100 | 88 | 85 | 82 |
| Comparative Example 2 | Favorable | 90.5 | 1.8 | 1.9 | 100/100 | 95 | Favorable | 100/100 | Favorable | 100/100 | Favorable | 100/100 | 94 | 92 | 90 |
| Comparative Example 3 | Favorable | 90.5 | 0.8 | 1.1 | 100/100 | 130 | Favorable | 100/100 | Favorable | 100/100 | Favorable | 100/100 | 100 | 65 | 65 |
| Comparative Example 4 | Favorable | 90.5 | 0.8 | 1.4 | 100/100 | 130 | Favorable | 100/100 | Favorable | 100/100 | Favorable | 100/100 | 80 | 65 | 65 |
| Comparative Example 5 | Favorable | 90.4 | 0.8 | 1.5 | 100/100 | 130 | Favorable | 100/100 | Favorable | 100/100 | Favorable | 100/100 | 80 | 65 | 65 |
| Comparative Example 6 | Favorable | 90.4 | 0.8 | 1.5 | 100/100 | 130 | Favorable | 100/100 | Favorable | 100/100 | Favorable | 100/100 | 100 | 65 | 65 |
| Comparative Example 7 | Favorable | 90.5 | 1.8 | 1.9 | 100/100 | 100 | Favorable | 100/100 | Favorable | 100/100 | Favorable | 100/100 | 98 | 96 | 93 |
| Comparative Example 8 | Favorable | 90.5 | 0.8 | 1.4 | 100/100 | 130 | Favorable | 100/100 | Favorable | 100/100 | Favorable | 100/100 | 90 | 65 | 65 |
| Comparative Example 9 | Slightly whiten | 90.4 | 3.5 | 2.7 | 100/100 | 90 | Favorable | 0/100 | Favorable | 100/100 | Favorable | 50/100 | 86 | 80 | 65 |
| Comparative Example 10 | Favorable | 90.5 | 1.8 | 1.9 | 100/100 | 95 | Favorable | 100/100 | Favorable | 100/100 | Favorable | 100/100 | 94 | 92 | 90 |
| Comparative Example 11 | Favorable | 90.5 | 0.8 | 1.1 | 100/100 | 130 | Favorable | 100/100 | Favorable | 100/100 | Favorable | 100/100 | 100 | 65 | 65 |
| Comparative Example 12 | Favorable | 90.2 | 0.8 | 2.4 | 100/100 | 95 | Favorable | 0/100 | Favorable | 100/100 | Favorable | 0/100 | 94 | 92 | 90 |
| Comparative Example 13 | Favorable | 90.2 | 0.6 | 2.5 | 100/100 | 136 | Favorable | 100/100 | Favorable | 100/100 | Favorable | 100/100 | 110 | 65 | 65 |

(continued)

| | Initial property evaluation | | | | | | Long-term environmental resistance evaluation | | | | | | | | |
|---|---|---|---|---|---|---|---|---|---|---|---|---|---|---|---|
| | Visual appearance evaluation | TT (%) | Haze (%) | wear resistance (ΔH) | Adhesion | Water contact angle (°) | Hot water resistance | | High-temperature environment durability | | Environment cycle test | | Water contact angle after outdoor exposure test (°) | | |
| | | | | | | | Appearance | Adhesion | Appearance | Adhesion | Appearance | Adhesion | 1M | 3M | 12M |
| Comparative Example 14 | Favorable | 90.4 | 0.8 | 1.8 | 100/100 | 130 | Favorable | 100/100 | Favorable | 100/100 | Favorable | 100/100 | 90 | 90 | 90 |
| Comparative Example 15 | Favorable | 90.2 | 0.8 | 2.4 | 100/100 | 92 | Favorable | 0/100 | Favorable | 100/100 | Favorable | 0/100 | 88 | 86 | 85 |
| Comparative Example 16 | Favorable | 90.3 | 0.7 | 5.5 | 100/100 | 105 | Favorable | 100/100 | Favorable | 100/100 | Favorable | 90/100 | 102 | 99 | 92 |

[Table 5]

| | Adhesive layer | Hard coat layer | Initial curing condition | Initial cured layer NMP immersion endurance time (sec.) (X) | Functional fine particles dispersion | | | | | | $X \times (A + 0.2)^2$ | Final curing condition | Functional fine particles ratio | | |
|---|---|---|---|---|---|---|---|---|---|---|---|---|---|---|---|
| | | | | | Fine particle type | Average primary particle size (nm) | concentration (wt%) | Dispersion medium | | | | | Surface layer (A) | Deeper layer (B) | Ratio between deeper layer and surface layer (B)/(A) |
| | | | | | | | | Type | Sp value | Difference between NMP and Sp value (A) | | | | | |
| Example 16 | None | UVHC-1 | 23°C 10 minutes -> 80°C 1 minute High-pressure mercury lamp 100 $mJ/cm^2$ | 40 | HA-2 | 100 | 1 | IBA | 21.5 | 0.8 | 40 | High-pressure mercury lamp 1000 $mJ/cm^2$ | 2 | 0.3 | 0.150 |
| Comparative Example 17 | None | UVHC-2 | High-pressure mercury lamp 80 $mJ/cm^2$ | 200 | HA-1 | 100 | 3 | IBA | 21.5 | 0.8 | 200 | High-pressure mercury lamp 700 $mJ/cm^2$ | 2 | 0 | 0.000 |
| Comparative Example 18 | None | UVHC-2 | High-pressure mercury lamp 50 $mJ/cm^2$ | 100 | HA-1 | 100 | 3 | IBA | 21.5 | 0.8 | 100 | High-pressure mercury lamp 700 $mJ/cm^2$ | 2 | 0 | 0.000 |

[Table 6]

| | Initial property evaluation | | | | | | Long-term environmental resistance evaluation | | | | | | | | |
|---|---|---|---|---|---|---|---|---|---|---|---|---|---|---|---|
| | Visual appearance evaluation | TT (%) | Haze (%) | wear resista nee (ΔH) | Adhesion | Surface resistance (Ω/□) | Hot water resistance | | High-temperature environment durability | | Environment cycle test | | Surface resistance (Ω/□) | | |
| | | | | | | | Appearance | Adhesion | Appearance | Adhesion | Appearance | Adhesion | 1M | 3M | 12M |
| Example 16 | Favorable | 88.8 | 1.4 | 2.8 | 100/100 | $1.1*10^{7}$ | Favorable | 95/100 | Favorable | 100/100 | Favorable | 100/100 | $2.1*10^{7}$ | $2.5*10^{7}$ | $3.2*10^{7}$ |
| Comparative Example 17 | Favorable | 88.2 | 1.2 | 7.9 | 100/100 | $1.2*10^{8}$ | Favorable | 100/100 | Favorable | 100/100 | Favorable | 90/100 | $1.3*10^{8}$ | $1.4*10^{8}$ | $1.5*10^{8}$ |
| Comparative Example 18 | Favorable | 88.3 | 1.4 | 8.2 | 100/100 | $1.1*10^{8}$ | Favorable | 100/100 | Favorable | 100/100 | Favorable | 100/100 | $1.2*10^{8}$ | $1.2*10^{8}$ | $1.2*10^{8}$ |

INDUSTRIAL APPLICABILITY

A substrate with a hard coat layer obtained by the production method of the present invention can be used for long periods of time even under severe conditions of use, and therefore can be used suitably for automobile windows, construction materials, camera lenses, solar cell surface protection panels, or the like.

REFERENCE SIGNS LIST

1: Functional fine particles
2: Substrate
3: Hard coat layer
4: Adhesive layer

**Claims**

1. A method for producing a substrate with a hard coat layer **characterized by** comprising

(1) providing a semi-cured hard coat layer consisting mainly of a resin on the substrate, the semi-cured hard layer satisfying the following formula (a):

$$12 \leq X \leq 600 \quad (a)$$

wherein, X indicates time in second required for the (Δ) haze of a glass with the semi-cured hard coat layer to exceed 5%, when the glass with the semi-cured hard coat layer is obtained by layering a 10 μm-thick, semi-cured hard coat layer on one side of 3 mm-thick float-processed soda glass; and then thus obtained glass with the semi-cured hard coat layer is immersed in an N-methylpyrrolidone solvent in an environment of 40°C,
(2) applying a dispersion in which functional fine particles are dispersed in a dispersion solvent satisfying the following formula (b) on the semi-cured hard coat layer:

$$12 \leq X \times (A + 0.2)^2 \leq 90 \text{ (b)}$$

wherein X denotes X described in the formula (a), A denotes the difference between the solubility parameter of the dispersion solvent in $MPa^{0.5}$unit and the solubility parameter of N-methylpyrrolidone (22.3 $MPa^{0.5}$), and
(3) curing the semi-cured hard coat layer completely.

2. The method for producing a substrate with a hard coat layer according to claim 1, wherein the thickness of the hard coat layer after complete curing is from 1 to 30 μm.

3. The method for producing a substrate with a hard coat layer according to claim 1 or 2, wherein the average primary particle size of the functional fine particles is from 1 to 500 nm.

4. The method for producing a substrate with a hard coat layer according to any one of claims 1 to 3, wherein the solid content in the dispersion is from 0.1 to 5% by weight.

5. The method for producing a substrate with a hard coat layer according to any one of claims 1 to 4, wherein the dispersion consists of the functional fine particles and the solvent.

6. The method for producing a substrate with a hard coat layer according to any one of claims 1 to 5, wherein the hard coat layer comprises a hydrolysis condensate of an organosilicon compound as a main component.

7. The method for producing a substrate with a hard coat layer according to any one of claims 1 to 6, wherein an adhesive layer with a film thickness of from 0.1 to 20 μm mainly comprising an acrylic resin composition is sandwiched

between the substrate and the hard coat layer.

**8.** The method for producing a substrate with a hard coat layer according to any one of claims 1 to 7, wherein the substrate is a light transmissive resin substrate having a thickness of from 1 to 25 mm.

**9.** The method for producing a substrate with a hard coat layer according to any one of claims 1 to 8, wherein the substrate is a substrate made of an amorphous thermoplastic resin.

**10.** The method for producing a substrate with a hard coat layer according to any one of claims 1 to 9, wherein the functional fine particles are dispersed in a greater number on the surface layer than in a deeper layer of the hard coat layer after complete curing.

**11.** A substrate with a hard coat layer comprising: a substrate; and a hard coat layer containing functional fine particles, wherein the volume ratio (A) of the functional fine particles within 0.1 μm from the surface of the hard coat layer is from 1.0 to 35%, and the volume ratio (B) of the functional fine particles within 0.1 μm from an interface on the opposite side of the surface of the hard coat layer is from 0.01% to 5.0%, and (B)/(A) is 0.25 or less.

**12.** The substrate with a hard coat layer according to claim 11, obtained by the production method according to any one of claims 1 to 10.

FIG. 1

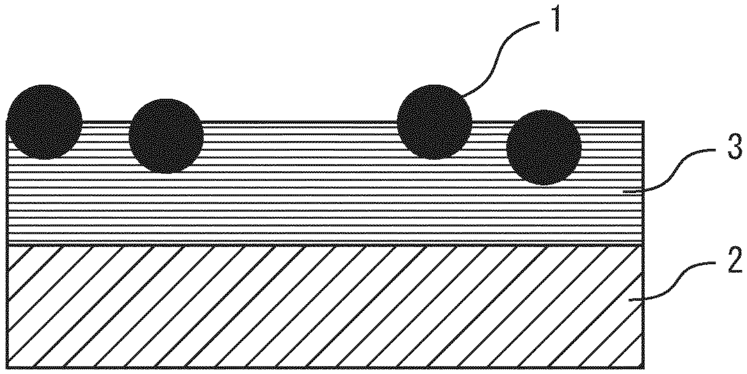


FIG. 2

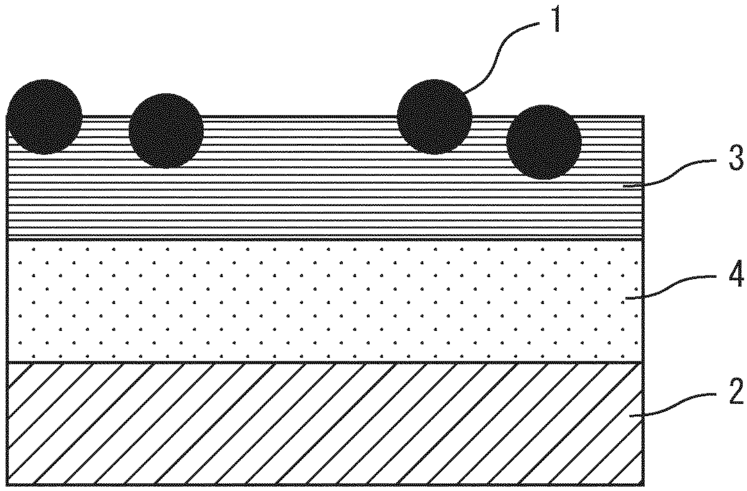

FIG. 3

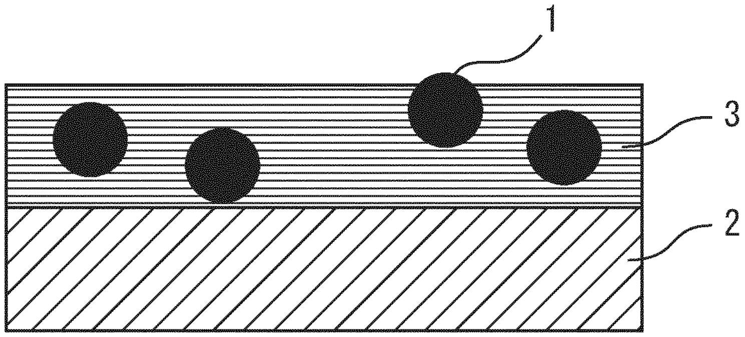


FIG. 4

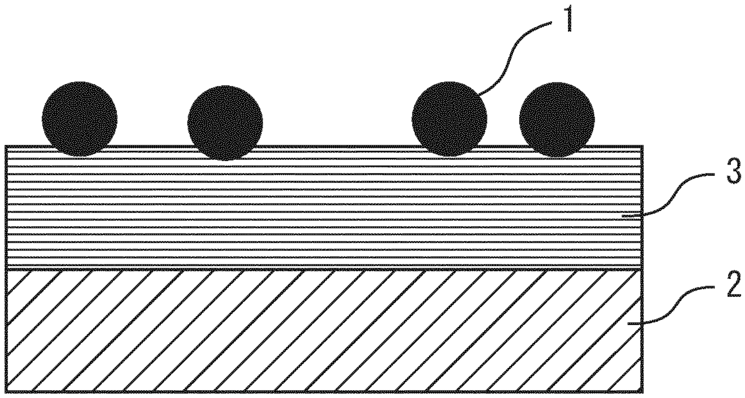

FIG. 5

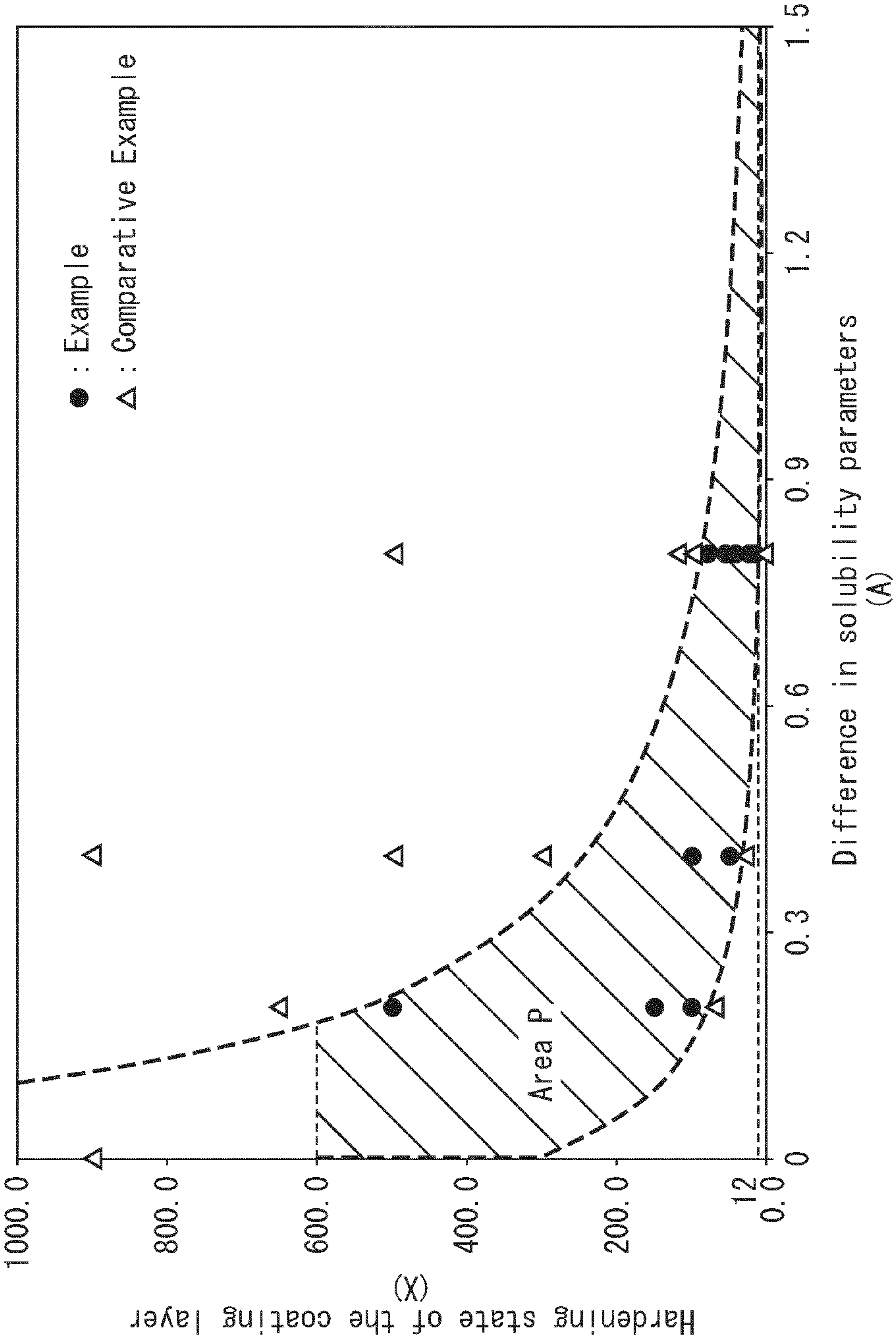
● : Example
△ : Comparative Example
Area P
Difference in solubility parameters
(A)
Hardening state of the coating layer
(X)
0
0.3
0.6
0.9
1.2
1.5
0.0
12
200.0
400.0
600.0
800.0
1000.0

## INTERNATIONAL SEARCH REPORT

International application No.
PCT/JP2019/004913

A. CLASSIFICATION OF SUBJECT MATTER
Int.Cl. C08J7/04(2006.01)i, B32B27/08(2006.01)i, B32B27/20(2006.01)i

According to International Patent Classification (IPC) or to both national classification and IPC

B. FIELDS SEARCHED

Minimum documentation searched (classification system followed by classification symbols)
Int.Cl. C08J7/04, B32B27/08, B32B27/20

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
JdreamIII

C. DOCUMENTS CONSIDERED TO BE RELEVANT

| Category* | Citation of document, with indication, where appropriate, of the relevant passages | Relevant to claim No. |
|---|---|---|
| X<br>A | JP 2017-082199 A (SAMSUNG ELECTRONICS CO., LTD.) 18 May 2017, paragraphs [0051]-[0065], [0190]-[0211], fig. 2, 9 & US 2018/0305472 A1 paragraphs [0063]-[0083], [0209]-[0247], fig. 2, 9 & WO 2017/073903 A1 & KR 10-2017-0049383 A | 11, 12<br>1-10 |
| A | JP 2016-136280 A (JSR CORPORATION) 28 July 2016, see entire text (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 May 2019 (09.05.2019) | 21 May 2019 (21.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2019/004913

C (Continuation). DOCUMENTS CONSIDERED TO BE RELEVANT

| Category* | Citation of document, with indication, where appropriate, of the relevant passages | Relevant to claim No. |
|---|---|---|
| A | JP 2016-173492 A (DAINIPPON PRINTING CO., LTD.) 29 September 2016, see entire text (Family: none) | 1-12 |
| A | JP 2005-148376 A (SUMITOMO OSAKA CEMENT CO., LTD.) 09 June 2005, see entire text (Family: none) | 1-12 |
| A | WO 2013/105656 A1 (DAINIPPON PRINTING CO., LTD.) 18 July 2013, see entire text & US 9103970 B2 whole document & KR 10-2014-0113874 A | 1-12 |
| A | JP 2013-210414 A (KONICA MINOLTA, INC.) 10 October 2013, see entire text (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011099056 A
- JP 2003039607 A
- WO 2015147295 A